# EUROPEAN PATENT APPLICATION

(11) **EP 4 163 782 A1**
(43) Date of publication of application: **12.04.2023**
(21) Application number: 21834199.8
(22) Date of filing: 12.04.2021
(51) Int. Cl.: G06F 3/14

(54) **CROSS-DEVICE DESKTOP MANAGEMENT METHOD, FIRST ELECTRONIC DEVICE, AND SECOND ELECTRONIC DEVICE**

(30) Priority: 29.06.2020 CN 202010609863
(71) Applicant: Huawei Technologies Co., Ltd., Longgang District, Shenzhen, Guangdong 518129 (CN)
(72) Inventor: YANG, Shishu, Shenzhen, Guangdong 518129 (CN); YANG, Tong, Shenzhen, Guangdong 518129 (CN)
(74) Representative: Pfenning, Meinig & Partner mbB
(86) International application number: PCT/CN2021/086505
(87) International publication number: WO 2022/001279

(57) **Abstract**

A cross-device desktop management method, a first electronic device, and a second electronic device are provided. The cross-device desktop management method is applied to a first electronic device, and includes: sending an access request to a second electronic device, where the access request is used to request to access desktop information of the second electronic device (S101); receiving the desktop information sent by the second electronic device; displaying a desktop of the second electronic device based on the desktop information (S103); receiving an editing operation performed by a user on the desktop of the second electronic device; generating desktop editing information of the second electronic device based on the editing operation, where the desktop editing information is used to edit the desktop of the second device; and sending the desktop editing information to the second electronic device (S104). The foregoing method can implement cross-device desktop management, and provide the user with more efficient and convenient user experience.

## Description

This application claims priority to Chinese Patent Application No. 202010609863.4, filed with the China National Intellectual Property Administration on June 29, 2020 and entitled "CROSS-DEVICE DESKTOP MANAGEMENT METHOD, FIRST ELECTRONIC DEVICE, AND SECOND ELECTRONIC DEVICE", which is incorporated herein by reference in its entirety.

### TECHNICAL FIELD

The present invention relates to the field of human-computer interaction technologies, and in particular, to a cross-device desktop management method, a first electronic device, and a second electronic device.

### BACKGROUND

With development of electronic technologies, applications on a mobile phone are increasingly diversified, so that the mobile phone becomes an electronic device most frequently used by a user. A desktop of the mobile phone is an interface most frequently viewed by the user. Therefore, desktop management has become a key factor that affects user experience.

In some scenarios, when the desktop of the electronic device needs to be managed, if the electronic device is not around, the desktop of the electronic device cannot be managed, causing great inconvenience. To manage the desktop of the electronic device of the user more conveniently and effectively, how to quickly and conveniently implement cross-device desktop management has become a problem to be resolved.

### SUMMARY

Embodiments of this application provide a cross-device desktop management method, a first electronic device, a second electronic device, an electronic device, a computer storage medium, and a computer program product, so as to implement cross-device desktop management, and provide a user with more efficient and convenient user experience.

According to a first aspect, an embodiment of this application provides a cross-device desktop management method. The cross-device desktop management method may be applied to a scenario of cross-device desktop management between a plurality of devices. For example, a user performs, by using an electronic device (for example, an electronic device A), an adjustment or editing operation related to a desktop, an always-on-display (Always-On-Display, AOD) interface, or a lock screen interface of another electronic device (for example, an electronic device B, an electronic device C, or an electronic device D), such as switching a wallpaper of a desktop or a lock screen interface, adding or deleting an application icon, or editing an icon layout or a widget, to provide the user with more efficient and convenient user experience. In this embodiment of the present invention, a desktop is used as an example to describe the cross-device desktop management method. It may be understood that a person skilled in the art may also extend the cross-device desktop management method to another graphical user interface.

The cross-device desktop management method is used to implement cross-desktop management on a second electronic device by a first electronic device. The first electronic device may be but is not limited to a device such as a smartphone, a tablet computer, a personal computer (personal computer, PC), a personal digital assistant (PDA, Personal Digital Assistant), a smartwatch, a netbook, a wearable electronic device, an augmented reality (augmented reality, AR) device, a virtual reality (virtual reality, VR) device, a smart screen, a vehicle-mounted device, a smart car, a smart speaker, or a robot. A specific form of the first electronic device is not specially limited in this application.

The first electronic device can establish a communication connection to the second electronic device. The second electronic device can share desktop information with the first electronic device. The first electronic device can display the desktop information shared by the second electronic device, edit a desktop of the second electronic device based on the displayed desktop information, and send desktop editing information to the second electronic device, so that the second electronic device can load and display, based on the desktop editing information, a desktop obtained after the editing by the first electronic device. That is, the second electronic device can share desktop information access permission of the second electronic device with the first electronic device based on the communication connection between the second electronic device and the first electronic device, so that a device user of the first electronic device can perform cross-device access to the desktop information of the second electronic device based on the shared desktop information access permission. The second electronic device may also be the device described above, such as the smartphone, the tablet computer, the personal computer (personal computer, PC), the personal digital assistant (PDA, Personal Digital Assistant), the smartwatch, the netbook, the wearable electronic device, the augmented reality (augmented reality, AR) device, the virtual reality (virtual reality, VR) device, the smart screen, the vehicle-mounted device, the smart car, the smart speaker, or the robot. However, the second electronic device is not limited thereto. In addition to any type of device described above, the second electronic device may also be a server device in a cloud, for example, a server device independently deployed in the cloud or a server device in a centrally deployed server cluster.

The cross-device desktop management method is applied to a first electronic device, and includes:
sending an access request to a second electronic device, where the access request is used to request to access desktop information of the second electronic device;
receiving the desktop information sent by the second electronic device;
displaying a desktop of the second electronic device based on the desktop information;
receiving an editing operation performed by a user on the desktop of the second electronic device;
generating desktop editing information of the second electronic device based on the editing operation, where the desktop editing information is used to edit the desktop of the second device; and
sending the desktop editing information to the second electronic device.

It may be understood that the cross-device desktop management method provided in this embodiment of the present invention can implement cross-device desktop management between devices, and can implement remote desktop management on an electronic device when a desktop of the electronic device cannot be managed because the electronic device is not around when the desktop of the electronic device needs to be managed, thereby providing a user with more convenient and effective use experience.

Specifically, that both the first electronic device and the second electronic device are mobile phones is used as an example. A desktop of the mobile phone may include at least one of the following: a status bar, a widget (widget) (for example, a time widget or a weather widget), an application icon, and a dock bar (dock bar, which is not displayed). In some examples, a navigation bar may be further displayed on the desktop of the mobile phone, for example, navigation is performed by using a virtual button. A navigation button generally includes one or more of a back (back) button, a home (home) button, a recent (recent) button, and a notification bar button. The back button is used to return to a previous interface. The home button is used to return to a home screen. The recent button is used to display a recently used application. The notification bar button is used to open a notification bar. In some other examples, the mobile phone may use a gesture for navigation. For example, a gesture of sliding inward on the left or right of the screen is used to return to the previous interface. A gesture of sliding upward at the bottom of the screen is used to return to the home screen. A gesture of sliding upward at the bottom of the screen and holding is used to display the recently used application. A gesture of sliding downward at the top of the screen is used to open the notification bar. Certainly, the mobile phone may alternatively perform navigation in another manner, and details are not described herein.

The mobile phone may include one or more desktops. The user may switch a currently displayed desktop of the mobile phone by using a gesture of sliding leftward or rightward on the desktop. It should be noted that this embodiment of this application is described by using an example in which the mobile phone includes three desktops. Actually, the mobile phone may include any of one or more desktops.

In this embodiment of the present invention, the first electronic device can at least be configured to provide a request access portal for the user to request, on the first electronic device, cross-device access to the desktop information of the second electronic device.

In an implementation, a function of cross-device desktop information sharing between different devices may be added to an operating system of the first electronic device, so that the function can be used as a built-in function of the operating system. In another implementation, cross-device desktop access between the first electronic device and another electronic device may be provided on the first electronic device in a form of a mobile application (Application, APP).

For the first implementation, in a specific implementation, the user may invoke a cross-device desktop access function of the first electronic device from functions of the first electronic device, and provide a device identifier (such as a mobile phone number, an internet protocol (Internet Protocol, IP) address of a computer, or a device account) of at least one to-be-selected electronic device when invoking the function, so that the user can select at least one electronic device from the to-be-selected electronic devices as the second electronic device, and send a cross-device desktop access request to the second electronic device.

Optionally, the to-be-selected electronic device may be an associated device of a device account corresponding to the first electronic device. After the user logs in to a device account on the first electronic device, the first electronic device can learn of a device identifier (for example, a mobile phone number, an internet protocol (Internet Protocol, IP) address of a computer, or a device account) of another associated device than the first electronic device. Cross-device desktop access permission sharing may be implemented between the first electronic device and the associated device, and the user may manually customize management and control, to determine a corresponding to-be-selected electronic device when the first electronic device invokes the cross-device desktop access function. An associated device of a device account may be an electronic device authorized by the user to establish an association relationship, and/or an electronic device whose quantity of historical login times of the device account reaches a preset quantity of times, and/or an electronic device to which the device account is logging in. An associated account of a device account may be another device account in a family group to which the device account belongs or a device account authorized by the user to establish an association with the device account and allow cross-device interface management.

Optionally, the foregoing to-be-selected electronic device may be a peripheral electronic device matched by using a wireless technology such as Bluetooth or Wi-Fi (Wireless fidelity). For example, the first electronic device and another electronic device are in a same Wi-Fi signal range, or are in an effective Bluetooth transmission range. Bluetooth is used as an example. After another electronic device is successfully paired with the first electronic device, the first electronic device may reach a cross-device interface access permission sharing relationship with the electronic device that is successfully paired with the first electronic device. When the user invokes the cross-device desktop access function, the electronic device that is successfully paired with the first electronic device may be used as the to-be-selected electronic device for cross-device desktop access by the first electronic device.

Certainly, the to-be-selected electronic device may alternatively be an electronic device manually configured or added by the user. The user establishes a cross-device interface access permission sharing relationship between the first electronic device and the configured electronic device, and the user may manually customize management and control.

The cross-device interface access permission sharing relationship may be a unidirectional sharing relationship or a bidirectional sharing relationship, but is not limited thereto. During actual application, a function of selecting the unidirectional or bidirectional sharing relationship may also be opened to the user, so that the user can select one thereof based on a requirement.

For the second implementation, the user may send a request for a cross-device access permission sharing relationship to another electronic device by using a desktop sharing APP (the APP may be an APP specially used for desktop sharing, or the desktop sharing function may be added to some social APPs). After the desktop sharing APP of the another electronic device receives the request, a cross-device access permission sharing relationship between the first electronic device and the another electronic device may be established. It should be noted that the sharing relationship may be a unidirectional sharing relationship or a bidirectional sharing relationship, but is not limited thereto. During actual application, the user may even choose to use the unidirectional sharing relationship or the bidirectional sharing relationship based on a requirement. In this implementation, the desktop sharing APP of the electronic device may prestore device information (for example, a sharing APP account of a device) of a plurality of electronic devices in a manner of a single contact or a group contact, so that when there is a data sharing requirement, data sharing between the desktop sharing APP and a single device corresponding to the single contact or a plurality of electronic devices corresponding to the group contact can be implemented by sending a desktop sharing request to the single contact or the group contact.

During actual application, a desktop information sharing relationship between two devices generally can be established only after mutual authorization and verification between the two devices succeed. This can be implemented in a diversified manner and flexibly selected during actual application.

With reference to the first aspect, in an optional implementation, the sending an access request to a second electronic device includes:
displaying a desktop editing interface, where the desktop editing interface includes N option icons, the N option icons respectively correspond to N to-be-selected electronic devices, the N option icons include a first option icon corresponding to the second electronic device, and N is greater than or equal to 1; and
sending the access request to the second electronic device in response to a selection operation performed by the user on the first option icon.

It may be understood that the cross-device desktop management method provided in this embodiment of the present invention can implement quick sharing of an application between devices, without using other communication software. This is easy to operate, and further brings convenience to the user and improves user experience.

During specific implementation, the user may perform a first preset operation on any desktop of the first electronic device, so that the first electronic device can enter a desktop editing mode. The first preset operation may be, for example, touching and holding a blank location on the desktop, pinching two fingers together, tapping a specific button, pressing a specific physical button (or a combination of physical buttons), or a floating gesture. Certainly, the user may alternatively trigger, in another manner such as a voice command, the mobile phone to enter the desktop editing mode.

After the mobile phone enters the desktop editing mode, the desktop editing interface is displayed. In this embodiment of this application, a display area of the first electronic device includes two areas. One area may be used to display a real-time thumbnail of the desktop, and the other area may be used by the user to perform an operation of editing the desktop, for example, selecting a wallpaper, adding a widget, selecting a transition effect, and enabling or disabling a related function. For example, a first area and a second area are arranged from top to bottom, and the first area is located above or below the second area; or the first area and the second area are arranged from left to right, and the first area is located on the left or right of the second area. Sizes of the first area and the second area may be the same or different. In an example, the first area and the second area do not overlap.

It may be understood that the second area may also include some controls for the user to operate. The control may be a control for editing a desktop, or may be a control for operating a desktop thumbnail. In other words, in this embodiment of this application, functions and display content of the first area and the second area are not strictly distinguished. This helps optimize a layout of controls on the desktop editing interface, and improve user experience.

In an example, when the first electronic device enters the desktop editing mode, the desktop editing interface is displayed, and a control used by the first electronic device to perform desktop editing is first displayed in the second area on the desktop editing interface, for example, a wallpaper control, a widget control, a transition effect control, and a desktop setting control. After the user performs a second preset operation on the desktop editing interface, a page displayed in the second area is switched to a page displaying the N option icons corresponding to the N to-be-selected electronic devices, so that the user can select, from the N to-be-selected electronic devices, an electronic device on which cross-device desktop editing is to be performed. The N to-be-selected electronic devices may include, for example, a mobile phone 1, a mobile phone 2, and a computer 1. The second preset operation may be sliding leftward, sliding rightward, sliding upward, sliding downward, pressing a specific physical button (or a combination of physical buttons), or the like in the second area. In this embodiment of the present invention, the second preset operation is specifically sliding leftward.

For example, the second electronic device is the mobile phone 1. When the user selects an option icon corresponding to the mobile phone 1, it indicates that the user selects the mobile phone 1 as an object requesting to perform cross-desktop editing, to trigger the first electronic device to send the access request to the second electronic device.

In another implementation of the present invention, a display name of the to-be-selected electronic device (for example, the mobile phone 1) on the first electronic device may be further displayed as a name of a device account associated with the to-be-selected electronic device and/or a device type and/or a device model of the to-be-selected electronic device, and a display icon (for example, an icon corresponding to the mobile phone 1) of the to-be-selected electronic device on the first electronic device may be further displayed as an image of the device account associated with the to-be-selected electronic device or a device entity image corresponding to the device type and/or the device model of the to-be-selected electronic device. Certainly, in another implementation of the present invention, only a name corresponding to the to-be-selected electronic device may be displayed, or only an icon corresponding to the to-be-selected electronic device may be displayed. This may be specifically flexibly set, and is not limited in the present invention.

In this embodiment of the present invention, the communication connection between the first electronic device and the second electronic device may be but is not limited to a communication connection in any connection mode such as Bluetooth, Wi-Fi (Wireless Fidelity, wireless fidelity), the internet, or a mobile network.

In this embodiment of the present invention, communication between the first electronic device and the second electronic device may also be implemented by using a third-party server, that is, information transfer between the first electronic device and the second electronic device is implemented by using the third-party server.

It should be noted that the first electronic device does not necessarily enter the desktop editing mode to send the access request to the second electronic device, for example, may send the access request to the second electronic device by using an APP used for desktop sharing, provided that cross-device desktop access can be performed on the second electronic device to initiate the access request.

In another embodiment of the present invention, when the first electronic device enters the desktop editing mode, the second area may further directly enter a page used to select an electronic device on which cross-device editing is expected to be performed, and the user does not need to perform the second preset operation on the desktop editing interface.

In another embodiment of the present invention, after the user performs the second preset operation on the desktop editing interface, the page displayed in the second area may be further switched to a page used to select a device type of the electronic device on which cross-device editing is expected to be performed. For example, the device type of the electronic device may include but is not limited to a mobile phone, a pad, a computer, and a speaker. When the user selects a control corresponding to a mobile phone type, one or more mobile phone options are tiled under the control corresponding to the mobile phone type. After the user selects a corresponding mobile phone option, for example, the mobile phone 1, the first electronic device is triggered to send the access request to an electronic device (the second electronic device in this embodiment of the present invention) corresponding to the mobile phone 1. It may be understood that classification processing is performed on the to-be-selected electronic devices, so that the user can quickly find an electronic device expected to be selected, thereby improving user experience.

With reference to the first aspect, in an optional implementation, the editing operation performed by the user on the desktop of the second electronic device includes any one or more of the following: changing a wallpaper, adding or deleting a widget, modifying a desktop transition effect, setting a desktop layout, and modifying an application icon.

For example, the changing a desktop wallpaper may be specifically: The first electronic device displays a wallpaper editing interface in response to an operation of tapping a wallpaper control by the user, where a second area of the interface displays a plurality of options, for example, a "more" option, a "gallery" option, a "wallpaper e" option, a "wallpaper f" option, and a "wallpaper" option. Each wallpaper option corresponds to one wallpaper, and the user may select a corresponding wallpaper by using these options, to apply the wallpaper to the desktop of the second electronic device. "Gallery" includes pictures locally stored in the first electronic device. When the user selects the "gallery" option, the pictures locally stored in the first electronic device are expanded in the "gallery" option for the user to select. The "more" option may provide network pictures for the user. When the user selects the "more" option, the network pictures are expanded in the "gallery" option for the user to select. It may be understood that a preview effect displayed in real time based on editing performed by the user on the desktop is displayed on a page in the first area that corresponds to the desktop. When selecting an expected wallpaper, for example, the "wallpaper e" option, the user confirms a setting operation on the selected wallpaper, to complete wallpaper changing. The user may alternatively perform other setting on the selected wallpaper, for example, blurring or scrolling. In this case, these effects may also be displayed in real time in the first area. Details are not described in this embodiment of this application.

For example, the adding or deleting a widget may be specifically: The first electronic device may display a plurality of widgets in response to an operation of tapping a widget control by the user. Widgets have a same size or different sizes. That is, the widgets occupy different areas on the desktop. In this case, when the widget is added to the desktop, aesthetics and applicability of the desktop layout may be affected. Therefore, in this application, the user may determine, by using a real-time preview image of the desktop of the second electronic device in the first area, whether to add a location of a widget, whether to delete a widget, or the like. The widgets include a clock widget, a weather widget, a mailbox widget, a browser widget, a memo widget, and another tool commonly used by the user. For example, the user may add a corresponding widget to a corresponding page in the first area 10A in a tap or drag manner. That is, the user may view an effect drawing displayed after a corresponding widget is added to each desktop. Certainly, the user may alternatively touch and hold a widget on each page in the first area, and drag the widget to a deletion control that appears in the first area, to delete the widget from the page. That is, an effect drawing displayed on the page after the widget is deleted from the desktop.

For example, the modifying a desktop transition effect may be specifically: The first electronic device expands and displays options of a plurality of transition effects in the second area in response to an operation of tapping a transition effect control by the user. The user may select an option of a corresponding transition effect, so that the user can view a desktop transition effect when switching is performed between different pages in the first area.

For example, the setting a desktop layout may be specifically: The first electronic device sets the desktop of the second electronic device in response to an operation of tapping a desktop setting control by the user. After the user modifies a desktop layout setting option, the first electronic device immediately modifies and displays the desktop layout.

For example, that the first electronic device modifies an application icon on the desktop of the second electronic device may include: modifying a location of the application icon on the desktop, or deleting the application icon on the desktop. The modifying a location of the application icon on the desktop may be: The user selects any one or more application icons on a page, and drags the selected application icon to another page in a touch-and-hold manner. Alternatively, the user may select any one or more application icons on a page, and drag the selected application icon to another location on the page in a touch-and-hold manner. Alternatively, when there is an empty location in a dock bar, the user may move an application icon in a non-dock bar to the dock bar. Alternatively, the user may move both a selected application icon in a dock bar and another application icon in a non-dock bar to another desktop.

For example, the deleting the application icon on the desktop may be specifically: touching and holding an application icon that needs to be deleted to select the application icon that needs to be deleted, displaying a deletion badge such as a " ×" badge on the application icon, and tapping the " ×" badge to delete the application icon and uninstall an application corresponding to the application icon; or after the user selects one or more application icons, displaying a deletion area, and dragging the one or more application icons to the deletion area to delete the application icon and uninstall an application corresponding to the application icon. The first electronic device displays a change of the application icon on the desktop in real time.

It should be learned that the following editing functions included in the first electronic device for the desktop of the second electronic device are not limited to the foregoing listed functions, and are not listed one by one in the present invention.

For example, in this embodiment of the present invention, in a process of performing desktop editing on the second electronic device by the first electronic device, the first electronic device may further display a completion button used to confirm the desktop editing operation. After the user selects the completion button in a manner such as tapping or pressing, the first electronic device may be triggered to generate desktop editing information based on the desktop editing operation performed by the user on the second electronic device, and send the desktop editing information to the second electronic device.

It should be noted that an example in which the desktop editing information is sent to the second electronic device only after the completion button is tapped is used herein for description. In another implementation of the present invention, an instant synchronization manner may be used. To be specific, after the user performs desktop editing on the first electronic device, the desktop editing information is instantly generated and sent to the second electronic device without tapping the completion button for trigger, and the second electronic device synchronously updates desktop setting of the second electronic device based on the desktop editing information.

With reference to the first aspect, in an optional implementation, the method further includes:
displaying M option icons, where the M option icons respectively correspond to M to-be-selected electronic devices, the M option icons include a first option icon corresponding to the second electronic device, and M is greater than or equal to 1;
receiving a first predetermined operation of moving a first application icon of a first application to the first option icon by the user, where the first application is installed on the first electronic device; and
sending application information of the first application to the second electronic device in response to the first predetermined operation.

In an example, before the first predetermined operation performed by the user on the first application icon is received, the user may perform the first preset operation on any desktop of the first electronic device, so that the first electronic device can enter a desktop editing mode. After entering the desktop editing mode, the mobile phone displays a desktop editing interface, where the desktop editing interface includes the M option icons. For implementation processes of the first predetermined operation, the desktop editing interface, and the option icon corresponding to the to-be-selected electronic device, refer to the foregoing corresponding content. To avoid repetition, details are not described herein again.

In this embodiment of the present invention, the application information of the first application may include but is not limited to installation information of the first application and/or interface invoking information of the first application. After receiving the interface invoking information of the first application, the second electronic device may display, on the desktop based on the interface invoking information, a first application icon corresponding to the first application (the first application icon presents different states based on whether the first application is installed; and if the first application is not installed, the first application icon may present a to-be-downloaded state; or if the first application is installed by the second electronic device, the first application icon may present an installed state). The installation information of the first application includes an installation link or an installation package of the first application.

With reference to the first aspect, in an optional implementation, after the sending application information of the first application to the second electronic device, the method further includes:
receiving a first message of the second electronic device, where the first message is used to prompt the first electronic device that permission verification performed by the second electronic device on the first electronic device fails, and/or the first application is installed on the second electronic device, and/or a data structure of the application information of the first application does not meet a preset requirement; and
prompting, based on the first message, the user that sharing of the first application fails.

In a specific implementation process, after receiving the application information of the first application, the second electronic device may first perform permission verification on the first electronic device, and after the permission verification succeeds, determine whether the first application is installed. If the second electronic device determines that the first application is not installed, the second electronic device may perform validity verification on the data structure of the application information of the first application.

If the permission verification performed by the second electronic device on the first electronic device fails, and/or the first application is installed on the second electronic device, and/or the validity verification performed on the data structure of the application information of the first application fails, the second electronic device may return the first message to the first electronic device. The first message is used to prompt the first electronic device that the permission verification on the first electronic device fails, and/or the first application is installed on the second electronic device, and/or the data structure of the application information of the first application is incorrect, to notify the first electronic device that cross-device sharing of the first application fails. After receiving the first message, the second electronic device generates prompt information to prompt the user that sharing of the first application fails.

With reference to the first aspect, in an optional implementation, the method further includes:
after the sending application information of the first application to the second electronic device, the method further includes:
receiving a second message of the second electronic device, where the second message is used to indicate that the first application is successfully shared with the second electronic device.

With reference to the first aspect, in an optional implementation, after the receiving a second message of the second electronic device, the method further includes:
uninstalling the first application in response to the second message.

It may be understood that, in this embodiment of the present invention, after the first application selected by the user is successfully shared with the second electronic device, the first application on the first electronic device is deleted. This is applicable to a scenario in which the user does not need to use the first application on the first electronic device and the second electronic device at the same time, thereby reducing use of memory space of the first electronic device.

With reference to the first aspect, in an optional implementation, the sending an access request to a second electronic device includes:
displaying Q option icons, where the Q option icons respectively correspond to Q to-be-selected electronic devices, the Q option icons include a first option icon corresponding to the second electronic device, and Q is greater than or equal to 1;
receiving a second predetermined operation of moving a first application icon of a first application to the first option icon by the user, where the first application is installed on the first electronic device; and
sending the access request to the second electronic device based on the second predetermined operation;
correspondingly, the receiving an editing operation performed by a user on the desktop of the second electronic device includes:
   receiving a movement operation performed by the user on the first application icon, where the movement operation is used to move the first application icon to a target desktop of the second electronic device, or move the first application icon to a target area of the target desktop; and
   correspondingly, the generating desktop editing information of the second electronic device based on the editing operation includes:
      generating location information based on the movement operation, where the location information includes information about selection performed by the user on the target desktop, or information about selection performed by the user on the target desktop and the target area of the target desktop; and
      sending application information of the first application and the location information to the second electronic device, where
      the application information of the first application is used by the second electronic device to display the first application icon in a to-be-downloaded state, or used by the second electronic device to download and install the first application, and display the first application icon in an installed state; and the location information is used by the second electronic device to determine to display the first application icon on the target desktop or the target area of the target desktop.

The second predetermined operation and the movement operation may be a continuous operation.

It may be understood that the cross-desktop management method provided in this embodiment of the present invention is used to access and display a desktop of another electronic device by using a predetermined gesture, so as to specify a desktop location at which an application icon is displayed on the second electronic device, provide the user with refined experience of cross-device application sharing, and implement cross-device application sharing in different application scenarios.

In this embodiment of the present invention, the application information of the first application may include but is not limited to installation information of the first application and/or interface invoking information of the first application. After receiving the interface invoking information of the first application, the second electronic device may display, on the desktop based on the interface invoking information, a first application icon corresponding to the first application (the first application icon presents different states based on whether the first application is installed; and if the first application is not installed, the first application icon may present a to-be-downloaded state; or if the first application is installed by the second electronic device, the first application icon may present an installed state). The installation information of the first application includes an installation link or an installation package of the first application.

In an example, before the second predetermined operation performed by the user on the first application icon is received, the user may perform the first preset operation on any desktop of the first electronic device, so that the first electronic device can enter a desktop editing mode. After entering the desktop editing mode, the mobile phone enters a desktop editing interface, and displays the option icons corresponding to the Q to-be-selected electronic devices on the desktop editing interface. For implementation processes of the first predetermined operation, the desktop editing interface, and the option icon corresponding to the to-be-selected electronic device, refer to the foregoing corresponding content. To avoid repetition, details are not described herein again.

In an example, the second predetermined operation performed by the user on the first application icon may be: The user selects the first application icon, drags the first application icon to the first option icon corresponding to the second electronic device in a second area in a touch-and-hold manner, continues to stay in a corresponding area of the option icon corresponding to the second electronic device in the second area in a touch-and-hold manner, and when stay duration reaches first preset duration, triggers the first electronic device to send the access request to the second electronic device. The first preset duration may be, for example, 1 second, 2 seconds, or 3 seconds. There may be one or more first application icons h selected by the user.

In an example, the movement operation may be: After the desktop of the second electronic device is displayed in a first area of the first electronic device, the user may continue to move, in a touch-and-hold manner, the first application icon to the desktop of the second electronic device that is displayed in the first area. Generally, the first area displays only a thumbnail of one desktop of the second electronic device. When the desktop of the second electronic device that is currently displayed in the first area is the target desktop expected by the user, the user may continue to move, in a touch-and-hold manner, the first application icon to the desktop of the second electronic device that is currently displayed in the first area. If the user wants to select another desktop of the second electronic device, the user may move the first application icon to the left or right of a page in a touch-and-hold manner and stay. When stay duration reaches second preset duration, the first area of the first electronic device may be switched to a thumbnail of the another desktop of the second electronic device, so as to select the target desktop. The second preset duration may be, for example, 1 second, 2 seconds, or 3 seconds.

In this embodiment of the present invention, the user may not only specify a desktop on which the first application icon is displayed in the second electronic device after sharing, but also specify a desktop location at which the first application icon is displayed in the second electronic device. The user may drag the first application icon to a target (expected) area of a to-be-selected target desktop in a touch-and-hold manner, so as to select the target desktop and the target area of the target desktop.

In an example, after moving the first application icon to the target desktop of the second electronic device, or moving the first application icon to the target area of the target desktop of the second electronic device, the user taps or presses a completion control displayed on the interface, so as to trigger the first electronic device to generate the location information based on the movement operation performed by the user on the first application icon, and send the location information to the second electronic device. The location information includes information about selection performed by the user on the target desktop, or information about selection performed by the user on the target desktop and the target area of the target desktop. The information about selection on the target desktop may be an identifier (for example, a desktop number) of the target desktop, and the information about selection on the target area of the target desktop may be coordinate location information of the target area on the target desktop.

It should be known that, after moving the first application icon to the target desktop of the second electronic device, or moving the first application icon to the target area of the target desktop of the second electronic device, the user may further perform another desktop editing operation on the desktop of the second electronic device, for example, the foregoing desktop editing operation such as changing a wallpaper, adding or deleting a widget, or modifying an application icon. After completing the desktop editing operation, the user may tap or press the displayed completion control, to generate the desktop editing information and send the desktop editing information to the second electronic device. The desktop editing information includes at least the location information and the application information of the first application.

It should be further noted that an example in which the application information and the location information are sent to the second electronic device only after the completion button is tapped is used herein for description. In another implementation of the present invention, after the user drags the first application icon on the first electronic device to the target (expected) area of the to-be-selected target desktop, the first electronic device instantly sends the application information of the first application to the second electronic device without tapping the completion button for trigger. If the user further needs to perform another desktop editing operation on the desktop of the second electronic device, the desktop editing information may also be instantly generated and sent to the second electronic device based on the desktop editing operation performed by the user, and the second electronic device synchronously updates desktop setting of the second electronic device based on the desktop editing information.

With reference to the first aspect, in an optional implementation, the desktop information of the second electronic device includes application information of the second electronic device, and after the receiving the desktop information sent by the second electronic device, the method further includes:
determining, based on the application information of the second electronic device, whether the first application is installed on the second electronic device; and
if no, prompting the user that the first application is installed on the second electronic device.

In this embodiment of the present invention, after receiving the desktop information sent by the second electronic device, the first electronic device may further determine, based on the desktop information of the second electronic device, whether the first application is installed on the second electronic device, where the desktop information of the second electronic device includes the application information of the second electronic device. If the first application is not installed on the second electronic device, the first electronic device displays the desktop of the second electronic device. If the first application is installed on the second electronic device, the first electronic device generates prompt information to prompt the user that the first application is installed on the second electronic device. Certainly, the foregoing process may be unnecessary, and the first electronic device may directly display the desktop of the second electronic device based on the desktop information sent by the second electronic device.

With reference to the first aspect, in an optional implementation, after the sending application information of the first application and the location information to the second electronic device, the method further includes:
receiving a third message of the second electronic device, where the third message is used to indicate that the first application is successfully shared with the second electronic device.

With reference to the first aspect, in an optional implementation, after the receiving a third message of the second electronic device, the method further includes:
uninstalling the first application in response to the third message.

It may be understood that, in this embodiment of the present invention, after the first application selected by the user is successfully shared with the second electronic device, the first application on the first electronic device is deleted. This is applicable to a scenario in which the user does not need to use the first application on the first electronic device and the second electronic device at the same time, thereby reducing use of memory space of the first electronic device.

According to a second aspect, an embodiment of this application provides a cross-device desktop management method, applied to a second electronic device. The method includes:
receiving an access request of a first electronic device, where the access request is used to request to access desktop information of the second electronic device;
sending the desktop information to the first electronic device based on the access request of the first electronic device, where the desktop information is used to display a desktop of the second electronic device; and
receiving desktop editing information sent by the first electronic device, and editing the desktop based on the desktop editing information.

With reference to the second aspect, in an optional implementation, the editing the desktop based on the desktop editing information includes:
performing any one or more of the following: changing a wallpaper, adding or deleting a widget, modifying a desktop transition effect, setting a desktop layout, and modifying an application icon.

With reference to the second aspect, in an optional implementation, the method further includes:
receiving application information of a first application that is sent by the first electronic device; and
based on the application information of the first application, displaying a first application icon corresponding to the first application in a to-be-downloaded state, or downloading and installing the first application, and displaying the first application icon corresponding to the first application in an installed state.

With reference to the second aspect, in an optional implementation, after the receiving application information of a first application that is sent by the first electronic device, the method further includes:
performing permission verification on the first electronic device, determining whether the first application is installed, and determining whether a data structure of the application information meets a validity requirement; and
if the permission verification on the first electronic device fails, and/or the first application is not installed, and/or the data structure of the application information does not meet the validity requirement, sending a first message to the second electronic device, where the first message is used to prompt that sharing of the first application fails, and is specifically used to prompt that the permission verification performed by the second electronic device on the first electronic device fails, and/or the first application is installed on the second electronic device, and/or the data structure of the application information of the first application does not meet a preset requirement.

With reference to the second aspect, in an optional implementation, the receiving desktop editing information sent by the first electronic device, and editing the desktop based on the desktop editing information includes:
receiving application information of a first application and location information that are sent by the first electronic device, where the location information includes information about selection performed by a user on a target desktop, or information about selection performed by the user on the target desktop and a target area of the target desktop, and the target desktop is the desktop of the second electronic device; and
based on the application information of the first application and the location information, displaying a first application icon corresponding to the first application on the target desktop or the target area of the target desktop in a to-be-downloaded state, or downloading and installing the first application, and then displaying the first application icon corresponding to the first application on the target desktop or the target area of the target desktop in an installed state.

According to a third aspect, an embodiment of this application provides a first electronic device. The first electronic device includes:
a first sending module, configured to send an access request to a second electronic device, where the access request is used to request to access desktop information of the second electronic device;
a first receiving module, configured to receive the desktop information sent by the second electronic device;
a first display module, configured to display a desktop of the second electronic device based on the desktop information;
a second receiving module, configured to receive an editing operation performed by a user on the desktop of the second electronic device, where the desktop editing information is used to edit the desktop of the second device;
a first generation module, configured to generate desktop editing information of the second electronic device based on the editing operation, where the desktop editing information is used to edit the desktop of the second device; and
a second sending module, configured to send the desktop editing information to the second electronic device.

In a feasible implementation, the first sending module includes:
a first display unit, configured to display a desktop editing interface, where the desktop editing interface includes N option icons, the N option icons respectively correspond to N to-be-selected electronic devices, the N option icons include a first option icon corresponding to the second electronic device, and N is greater than or equal to 1; and
a first sending unit, configured to send the access request to the second electronic device in response to a selection operation performed by the user on the first option icon.

In a feasible implementation, the editing operation performed by the user on the desktop of the second electronic device includes any one or more of the following: changing a wallpaper, adding or deleting a widget, modifying a desktop transition effect, setting a desktop layout, and modifying an application icon.

In a feasible implementation, the first electronic device further includes:
a second display module, configured to display M option icons, where the M option icons respectively correspond to M to-be-selected electronic devices, the M option icons include a first option icon corresponding to the second electronic device, and M is greater than or equal to 1;
a third receiving module, configured to receive a first predetermined operation of moving a first application icon of a first application to the first option icon by the user, where the first application is installed on the first electronic device; and
a third sending module, configured to send application information of the first application to the second electronic device in response to the first predetermined operation.

In a feasible implementation, the first electronic device further includes:
a fourth receiving module, configured to receive a first message of the second electronic device, where the first message is used to prompt the first electronic device that permission verification performed by the second electronic device on the first electronic device fails, and/or the first application is installed on the second electronic device, and/or a data structure of the application information of the first application does not meet a preset requirement; and
a first prompt module, configured to prompt, based on the first message, the user that sharing of the first application fails.

In a feasible implementation, the first electronic device further includes:
a fifth receiving module, configured to receive a second message of the second electronic device, where the second message is used to indicate that the first application is successfully shared with the second electronic device.

In a feasible implementation, the first electronic device further includes:
a first uninstallation module, configured to uninstall the first application in response to the second message.

In a feasible implementation, the first sending module includes:
a first display unit, configured to display Q option icons, where the Q option icons respectively correspond to Q to-be-selected electronic devices, the Q option icons include a first option icon corresponding to the second electronic device, and Q is greater than or equal to 1; and
a first receiving unit, configured to receive a second predetermined operation of moving a first application icon of a first application to the first option icon by the user, where the first application is installed on the first electronic device;
correspondingly, the second receiving module includes:
   a second receiving unit, configured to receive a movement operation performed by the user on the first application icon, where the movement operation is used to move the first application icon to a target desktop of the second electronic device, or move the first application icon to a target area of the target desktop; and
   correspondingly, the first generation module includes:
      a first generation unit, configured to generate location information based on the movement operation, where the location information includes information about selection performed by the user on the target desktop, or information about selection performed by the user on the target desktop and the target area of the target desktop; and
      a second sending unit, configured to send application information of the first application and the location information to the second electronic device, where the application information of the first application is used by the second electronic device to display the first application icon in a to-be-downloaded state, or used by the second electronic device to download and install the first application, and display the first application icon in an installed state; and the location information is used by the second electronic device to determine to display the first application icon on the target desktop or the target area of the target desktop.

In a feasible implementation, the desktop information of the second electronic device includes application information of the second electronic device, and the first electronic device further includes:
a first determining module, configured to determine, based on the application information of the second electronic device, whether the first application is installed on the second electronic device; and
a second prompt module, configured to: if the first application is not installed on the second electronic device, prompt the user that the first application is installed on the second electronic device.

In a feasible implementation, the first electronic device further includes:
a sixth receiving module, configured to receive a third message of the second electronic device, where the third message is used to indicate that the first application is successfully shared with the second electronic device.

In a feasible implementation, the first electronic device further includes:
a second uninstallation module, configured to uninstall the first application in response to the third message.

According to a fourth aspect, an embodiment of this application provides a second electronic device. The second electronic device includes:
a first receiving module, configured to receive an access request of a first electronic device, where the access request is used to request to access desktop information of the second electronic device;
a first sending module, configured to send the desktop information to the first electronic device based on the access request of the first electronic device, where the desktop information is used to display a desktop of the second electronic device; and
a second receiving module, configured to: receive desktop editing information sent by the first electronic device, and edit the desktop based on the desktop editing information.

In a feasible implementation, the second receiving module is specifically configured to perform any one or more of the following: changing a wallpaper, adding or deleting a widget, modifying a desktop transition effect, setting a desktop layout, and modifying an application icon.

In a feasible implementation, the second electronic device further includes:
a third receiving module, configured to receive application information of a first application that is sent by the first electronic device; and
a first display module, configured to: based on the application information of the first application, display a first application icon corresponding to the first application in a to-be-downloaded state, or download and install the first application, and display the first application icon corresponding to the first application in an installed state.

In a feasible implementation, the second electronic device further includes:
a first verification module, configured to: perform permission verification on the first electronic device, determine whether the first application is installed, and determine whether a data structure of the application information meets a validity requirement; and
a second sending module, configured to: if the permission verification on the first electronic device fails, and/or the first application is not installed, and/or the data structure of the application information does not meet the validity requirement, send a first message to the second electronic device, where the first message is used to prompt that sharing of the first application fails, and is specifically used to prompt that the permission verification performed by the second electronic device on the first electronic device fails, and/or the first application is installed on the second electronic device, and/or the data structure of the application information of the first application does not meet a preset requirement.

In a feasible implementation, the second receiving module includes:
a first receiving unit, configured to receive application information of a first application and location information that are sent by the first electronic device, where the location information includes information about selection performed by a user on a target desktop, or information about selection performed by the user on the target desktop and a target area of the target desktop, and the target desktop is the desktop of the second electronic device; and
a second display unit, configured to: based on the application information of the first application and the location information, display a first application icon on the target desktop or the target area of the target desktop in a to-be-downloaded state, or download and install the first application, and then display the first application icon corresponding to the first application on the target desktop or the target area of the target desktop in an installed state.

According to a fifth aspect, an embodiment of this application provides an electronic device. The electronic device includes a memory, a processor, a touch sensor, and a display. The memory stores a computer program, the processor is connected to the memory, and the processor executes the computer program to implement the method in any one of the first aspect or the optional implementations of the first aspect.

According to a sixth aspect, an embodiment of this application provides an electronic device. The electronic device includes a memory, a processor, a touch sensor, and a display. The memory stores a computer program, the processor is connected to the memory, and the processor executes the computer program to implement the method in any one of the second aspect or the optional implementations of the second aspect.

According to a seventh aspect, an embodiment of this application provides a computer-readable storage medium, including computer instructions. When the computer instructions are run on an electronic device, the electronic device is enabled to perform the method in any one of the first aspect or the optional implementations of the first aspect.

According to an eighth aspect, an embodiment of this application provides a computer-readable storage medium, including computer instructions. When the computer instructions are run on an electronic device, the electronic device is enabled to perform the method in any one of the second aspect or the optional implementations of the second aspect.

According to a ninth aspect, an embodiment of this application provides a computer program product. When the computer program product is run on a computer, the computer is enabled to perform the method in any one of the first aspect or the optional implementations of the first aspect.

According to a tenth aspect, an embodiment of this application provides a computer program product. When the computer program product is run on a computer, the computer is enabled to perform the method in any one of the second aspect or the optional implementations of the second aspect.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of the present invention;
FIG. 3 is a flowchart of a cross-device desktop management method according to an embodiment of the present invention;
FIG. 4 is an interactive flowchart of a cross-device desktop management method according to an embodiment of the present invention;
FIG. 5 is a schematic diagram of an example desktop of a first electronic device according to an embodiment of the present invention;
FIG. 6 is a schematic diagram of an example desktop of a second electronic device according to an embodiment of the present invention;
FIG. 7a to FIG. 7i are schematic diagrams of desktops in a process of implementing a cross-device desktop management method by a first electronic device according to an embodiment of the present invention;
FIG. 8a and FIG. 7b are schematic diagrams of desktops in a process of implementing a cross-device desktop management method by a first electronic device according to an embodiment of the present invention;
FIG. 9 is another flowchart of a cross-device desktop management method according to an embodiment of the present invention;
FIG. 10 is another interactive flowchart of a cross-device desktop management method according to an embodiment of the present invention;
FIG. 11 and FIG. 12 are schematic diagrams of desktops in a process of implementing a cross-device desktop management method by a first electronic device according to an embodiment of the present invention;
FIG. 13 is a schematic diagram of another example desktop of a second electronic device according to an embodiment of the present invention;
FIG. 14 is a schematic diagram of another example desktop of a second electronic device according to an embodiment of the present invention;
FIG. 15 is another flowchart of a cross-device desktop management method according to an embodiment of the present invention;
FIG. 16 is another interactive flowchart of a cross-device desktop management method according to an embodiment of the present invention;
FIG. 17 and FIG. 18 are schematic diagrams of desktops in a process of implementing a cross-device desktop management method by a first electronic device according to an embodiment of the present invention;
FIG. 19 is a schematic diagram of another example desktop of a second electronic device according to an embodiment of the present invention;
FIG. 20 is a schematic diagram of another example desktop of a second electronic device according to an embodiment of the present invention;
FIG. 21 is a schematic diagram of a structure of a first electronic device according to an embodiment of the present invention; and
FIG. 22 is a schematic diagram of a structure of a second electronic device according to an embodiment of the present invention.

### DESCRIPTION OF EMBODIMENTS

To make the technical solutions of the present invention more comprehensible, the following describes embodiments of this application in detail with reference to the accompanying drawings.

It should be clear that the described embodiments are merely some rather than all of embodiments of the present invention. All other embodiments obtained by a person of ordinary skill in the art based on embodiments of the present invention without creative efforts shall fall within the protection scope of the present invention.

In this application, "at least one" means one or more, and "a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally represents an "or" relationship between associated objects. "At least one of the following" or a similar expression thereof indicates "any combination of the following", including "one or any combination of the following". For example, at least one of a, b, or c may represent: a, b, c, a and b, a and c, b and c, or a, b, and c, where a, b, and c may be singular or plural.

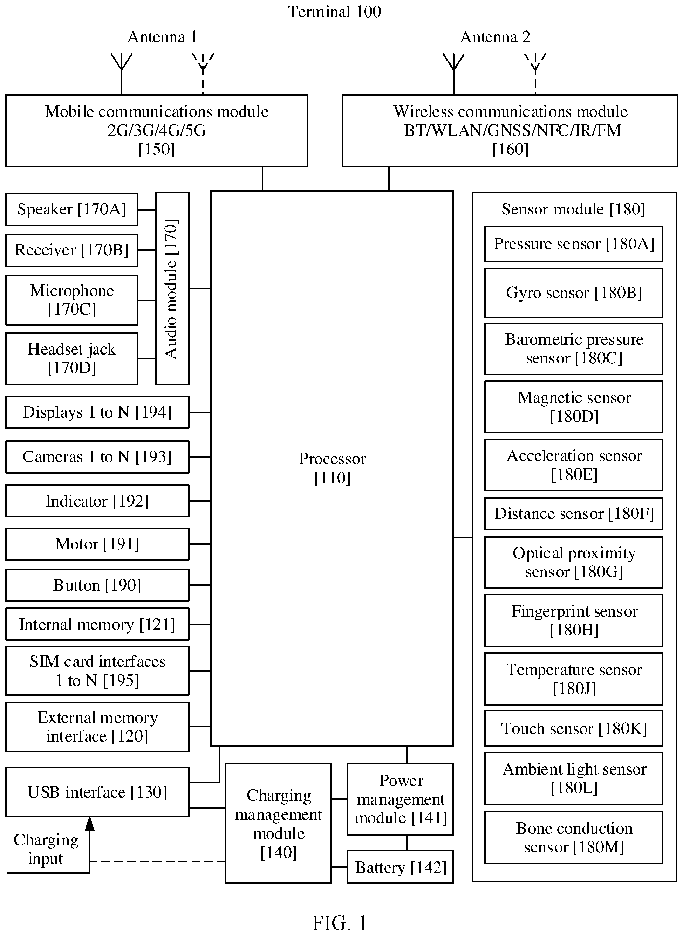

FIG. 1 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communications module 160 through the PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini-USB interface, a micro-USB interface, a USB Type-C interface, or the like. The USB interface 130 may be configured to connect to the charger to charge the electronic device 100, may be configured to transmit data between the electronic device 100 and a peripheral device, or may be configured to connect to a headset for playing audio through the headset. Alternatively, the interface may be configured to connect to another electronic device such as an AR device.

It may be understood that an interface connection relationship between the modules illustrated in this embodiment of the present invention is merely an example for description, and does not constitute a limitation on the structure of the electronic device 100. In some other embodiments of this application, the electronic device 100 may alternatively use an interface connection manner that is different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or an input of the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to increase antenna utilization. For example, the antenna 1 may be multiplexed as a diversity antenna of a wireless local area network. In some other embodiments, the antenna may be used in combination with a tuning switch.

The mobile communications module 150 may provide a wireless communication solution that is applied to the electronic device 100 and that includes 2G/3G/4G/5G or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some function modules in the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communications module 150 or another function module.

The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communications module 160 may be one or more components integrating at least one communication processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements the display function through the GPU, the display 194, the application processor, and the like. The GPU is a microprocessor for image processing, and connects the display 194 to the application processor. The GPU is configured to: perform mathematical and geometric calculation, and perform graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a shooting scenario. In some embodiments, the ISP may be disposed in the camera 193.

The camera 193 is configured to capture a static image or a video. An object generates an optical image through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform on energy of the frequency.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the electronic device 100 and data processing.

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, or is configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may be configured to listen to music or answer a hands-free call through the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change of the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing an SMS message is executed. When a touch operation whose touch operation intensity is greater than or equal to the first pressure threshold is performed on a Messages application icon, an instruction for creating an SMS message is executed.

The gyro sensor 180B may be configured to determine a motion posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when a shutter is pressed, the gyro sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance in an infrared or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light through the light-emitting diode. The electronic device 100 detects infrared reflected light from a nearby object through the photodiode. When detecting sufficient reflected light, the electronic device 100 may determine that there is an object near the electronic device 100. Alternatively, when detecting insufficient reflected light, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust luminance of the display 194 based on the sensed ambient light luminance. The ambient light sensor 180L may also be configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to the low temperature. In some other embodiments, when the temperature is less than still another threshold, the electronic device 100 boosts an output voltage of the battery 142 to prevent abnormal shutdown caused by the low temperature.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer the detected touch operation to the application processor, to determine a type of a touch event. The display 194 may provide a visual output related to the touch operation. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or separated from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network by using the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system with a layered architecture is used as an example to describe a software structure of the electronic device 100.

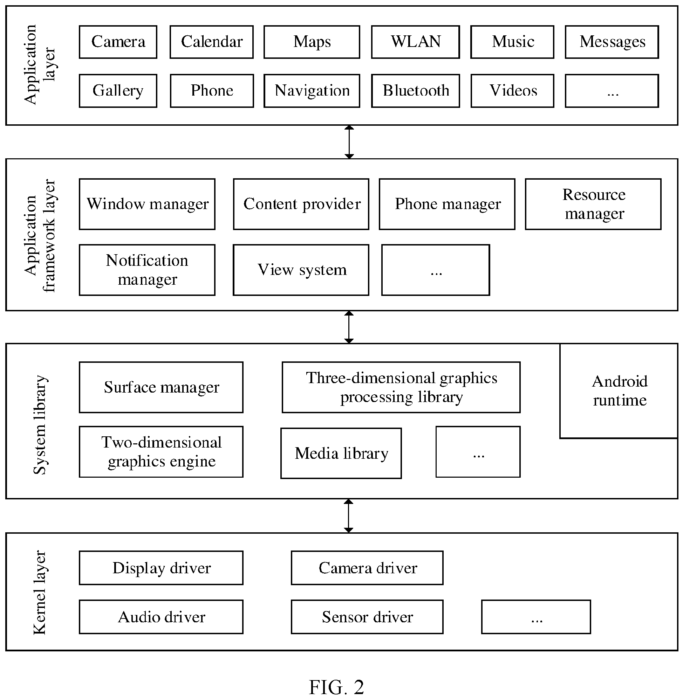

FIG. 2 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

In this embodiment of this application, the application framework layer may further include an activity manager AMS, which is configured to manage an activity, and is responsible for starting, switching, and scheduling components in the system, managing and scheduling an application, and the like.

For example, after it is detected that the mobile phone enters a desktop editing mode, a first application may invoke the activity manager to set a mode for two windows. One window may be used to display a real-time thumbnail of a desktop, and the other window may be used to display related controls that can be used by a user to edit the desktop, for example, a control for selecting a wallpaper, a control for adding a desktop widget, a control for selecting a transition effect, and a control for enabling or disabling a related function. The window manager draws a corresponding interface of each window according to the mode for the two windows that is set by the activity manager.

The content provider is configured to: store and obtain data, and enable the data to be accessed by an application. The data may include a video, an image, audio, calls that are made and received, a browsing history and bookmarks, an address book, and the like.

The view system includes visual controls, such as a control for displaying a text and a control for displaying a picture. The view system may be configured to construct an application. A display interface may include one or more views. For example, a display interface including a Messages notification icon may include a text display view and a picture display view.

The phone manager is configured to provide a communication function of the electronic device 100, for example, management of a call status (including answering or declining a call).

The resource manager provides an application with various resources such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion and give a message notification. The notification manager may alternatively be a notification that appears in a top status bar of the system in a form of a graph or a scroll bar text, for example, a notification of an application running on the background, or may be a notification that appears on the screen in a form of a dialog window. For example, text information is displayed in the status bar, an alert sound is played, the electronic device vibrates, or the indicator light blinks.

The Android runtime includes a kernel library and a virtual machine. The Android runtime is responsible for scheduling and managing the Android system.

The kernel library includes two parts: a function that needs to be invoked in Java language, and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes examples of working procedures of software and hardware of the electronic device 100 with reference to a photographing scenario.

All technical solutions in the following embodiments may be implemented in the electronic device 100 that has the foregoing hardware architecture and the foregoing software architecture.

A cross-device desktop management method provided in embodiments of the present invention may be applied to a scenario of cross-device desktop management between a plurality of devices. For example, a user performs, by using an electronic device (for example, an electronic device A), an adjustment or editing operation related to a desktop, an always-on-display (Always On Display, AOD) interface, or a lock screen interface of another electronic device (for example, an electronic device B, an electronic device C, or an electronic device D), such as switching a wallpaper of a desktop or a lock screen interface, adding or deleting an application icon, or editing an icon layout or a widget, to provide the user with more efficient and convenient user experience. The following uses a desktop as an example to describe the cross-device desktop management method provided in embodiments of the present invention. It may be understood that a person skilled in the art may also extend the cross-device desktop management method to another graphical user interface.

The cross-device desktop management method provided in embodiments of the present invention is used to implement cross-desktop management on a second electronic device by a first electronic device. The first electronic device may be the electronic device 100 shown in FIG. 1. The first electronic device may be but is not limited to a device such as a smartphone, a tablet computer, a personal computer (personal computer, PC), a personal digital assistant (PDA, Personal Digital Assistant), a smartwatch, a netbook, a wearable electronic device, an augmented reality (augmented reality, AR) device, a virtual reality (virtual reality, VR) device, a smart screen, a vehicle-mounted device, a smart car, a smart speaker, or a robot. A specific form of the first electronic device is not specially limited in this application.

The first electronic device can establish a communication connection to the second electronic device. The second electronic device can share desktop information with the first electronic device. The first electronic device can display the desktop information shared by the second electronic device, edit a desktop of the second electronic device based on the displayed desktop information, and send desktop editing information to the second electronic device, so that the second electronic device can reload and display, based on the desktop editing information, a desktop obtained after the editing by the first electronic device. That is, the second electronic device can share desktop information access permission of the second electronic device with the first electronic device based on the communication connection between the second electronic device and the first electronic device, so that a device user of the first electronic device can perform cross-device access to the desktop information of the second electronic device based on the shared desktop information access permission. The second electronic device may also be the device described above, such as the smartphone, the tablet computer, the personal computer (personal computer, PC), the personal digital assistant (PDA, Personal Digital Assistant), the smartwatch, the netbook, the wearable electronic device, the augmented reality (augmented reality, AR) device, the virtual reality (virtual reality, VR) device, the smart screen, the vehicle-mounted device, the smart car, the smart speaker, or the robot. However, the second electronic device is not limited thereto. In addition to any type of device described above, the second electronic device may also be a server device in a cloud, for example, a server device independently deployed in the cloud or a server device in a centrally deployed server cluster.

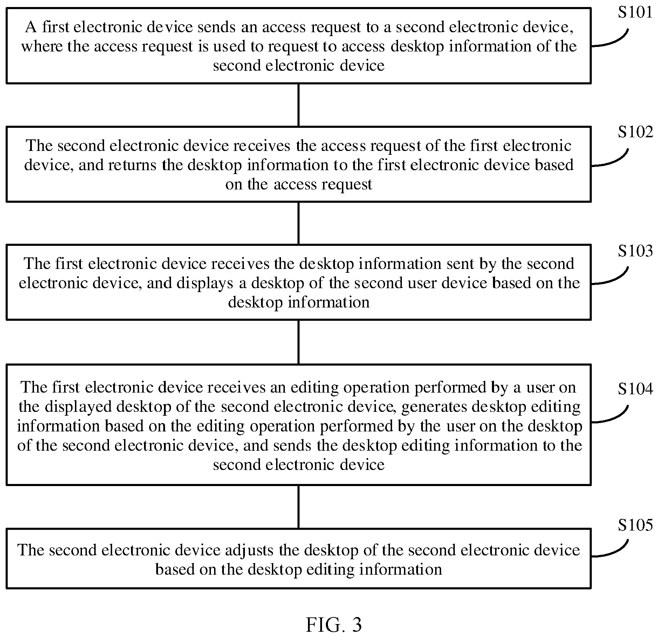

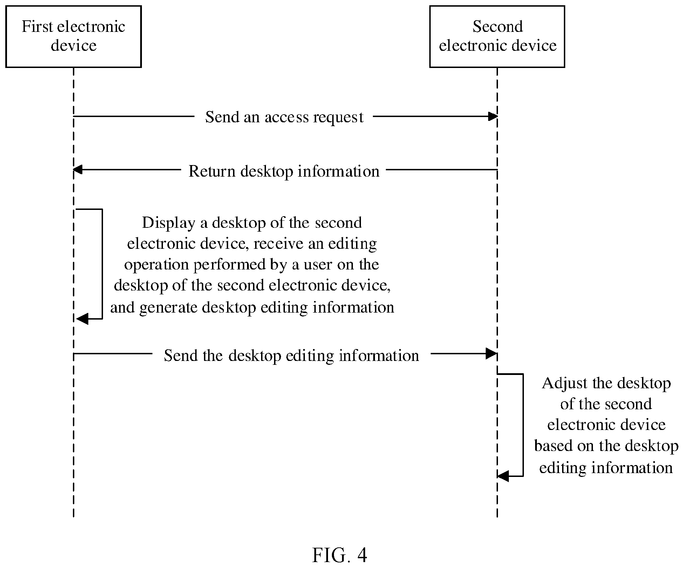

FIG. 3 is a flowchart of a cross-device desktop management method according to this application. FIG. 4 is a flowchart of interaction between a first electronic device and a second electronic device in a cross-device desktop management method according to this application.

With reference to FIG. 3 and FIG. 4, the cross-device desktop management method provided in this application may include the following steps:
Step S 101: The first electronic device sends an access request to the second electronic device, where the access request is used to request to access desktop information of the second electronic device.
Step S102: The second electronic device receives the access request of the first electronic device, and returns the desktop information to the first electronic device based on the access request.
Step S103: The first electronic device receives the desktop information sent by the second electronic device, and displays a desktop of the second electronic device based on the desktop information.
Step S104: The first electronic device receives an editing operation performed by a user on the displayed desktop of the second electronic device, generates desktop editing information based on the editing operation performed by the user on the desktop of the second electronic device, and sends the desktop editing information to the second electronic device.
Step S105: The second electronic device adjusts the desktop of the second electronic device based on the desktop editing information.

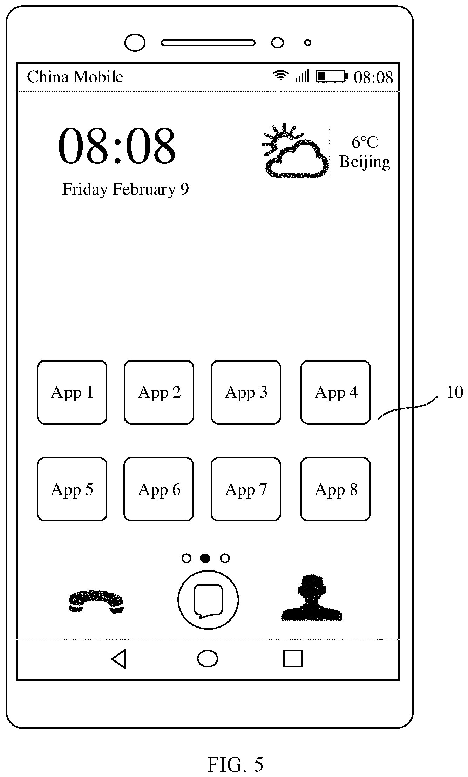

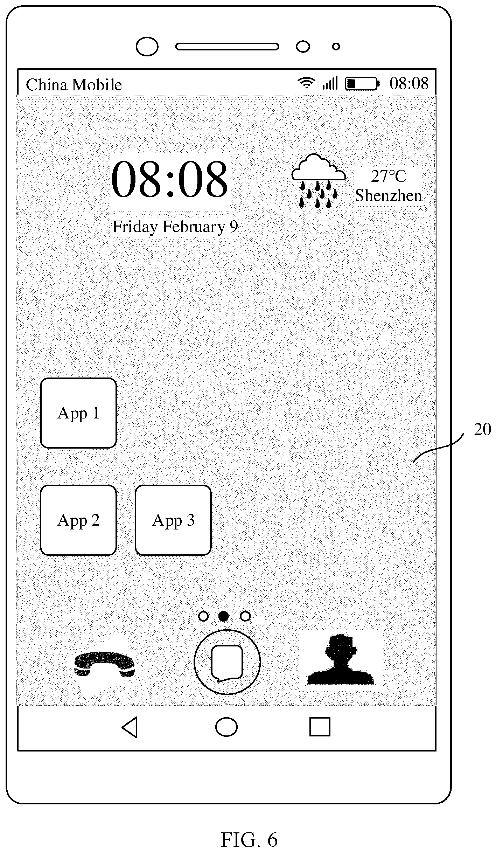

FIG. 5 is a schematic diagram of an example desktop of a first electronic device according to this application. FIG. 6 is a schematic diagram of an example desktop of a second electronic device according to this application.

As shown in FIG. 5 and FIG. 6, that both the first electronic device and the second electronic device are mobile phones is used as an example. An interface 10 shown in FIG. 5 and an interface 20 shown in FIG. 6 are both examples of a desktop (which may also be referred to as a home screen interface) of the mobile phone. The desktop of the mobile phone may include at least one of the following: a status bar, a widget (widget) (for example, a time widget or a weather widget), an application icon, and a dock bar (dock bar, which is not displayed). In some examples, a navigation bar may be further displayed on the desktop of the mobile phone, for example, navigation is performed by using a virtual button. A navigation button generally includes one or more of a back (back) button, a home (home) button, a recent (recent) button, and a notification bar button. The back button is used to return to a previous interface. The home button is used to return to a home screen. The recent button is used to display a recently used application. The notification bar button is used to open a notification bar. In some other examples, the mobile phone may use a gesture for navigation. For example, a gesture of sliding inward on the left or right of the screen is used to return to the previous interface. A gesture of sliding upward at the bottom of the screen is used to return to the home screen. A gesture of sliding upward at the bottom of the screen and holding is used to display the recently used application. A gesture of sliding downward at the top of the screen is used to open the notification bar. Certainly, the mobile phone may alternatively perform navigation in another manner, and details are not described herein.

The mobile phone may include one or more desktops. The user may switch a currently displayed desktop of the mobile phone by using a gesture of sliding leftward or rightward on the desktop. For example, if the user performs a leftward sliding gesture on the interface 10 (which may be denoted as a desktop A) shown in FIG. 5, the mobile phone displays another desktop (which may be denoted as a desktop B). If the user performs a rightward sliding gesture again on the interface 10, the mobile phone displays another desktop (which may be denoted as a desktop C) of the mobile phone. It should be noted that this embodiment of this application is described by using an example in which the mobile phone includes three desktops. Actually, the mobile phone may include any of one or more desktops.

In this embodiment of the present invention, the first electronic device can at least be configured to provide a request access portal for the user to request, on the first electronic device, cross-device access to the desktop information of the second electronic device.

In an implementation, a function of cross-device desktop information sharing between different devices may be added to an operating system of the first electronic device, so that the function can be used as a built-in function of the operating system. In another implementation, cross-device desktop access between the first electronic device and another electronic device may be provided on the first electronic device in a form of a mobile application (Application, APP).

For the first implementation, in a specific implementation, the user may invoke a cross-device desktop access function of the first electronic device from functions of the first electronic device, and provide a device identifier (such as a mobile phone number, an internet protocol (Internet Protocol, IP) address of a computer, or a device account) of at least one to-be-selected electronic device when invoking the function, so that the user can select at least one electronic device from the to-be-selected electronic devices as the second electronic device, and send a cross-device desktop access request to the second electronic device.

Optionally, the to-be-selected electronic device may be an associated device of a device account corresponding to the first electronic device. After the user logs in to a device account on the first electronic device, the first electronic device can learn of a device identifier (for example, a mobile phone number, an internet protocol (Internet Protocol, IP) address of a computer, or a device account) of another associated device than the first electronic device. Cross-device desktop access permission sharing may be implemented between the first electronic device and the associated device, and the user may manually customize management and control, to determine a corresponding to-be-selected electronic device when the first electronic device invokes the cross-device desktop access function. An associated device of a device account may be an electronic device authorized by the user to establish an association relationship, and/or an electronic device whose quantity of historical login times of the device account reaches a preset quantity of times, and/or an electronic device to which the device account is logging in. An associated account of a device account may be another device account in a family group to which the device account belongs or a device account authorized by the user to establish an association with the device account and allow cross-device interface management.

Optionally, the foregoing to-be-selected electronic device may be a peripheral electronic device matched by using a wireless technology such as Bluetooth or Wi-Fi (Wireless fidelity). For example, the first electronic device and another electronic device are in a same Wi-Fi signal range, or are in an effective Bluetooth transmission range. Bluetooth is used as an example. After another electronic device is successfully paired with the first electronic device, the first electronic device may reach a cross-device interface access permission sharing relationship with the electronic device that is successfully paired with the first electronic device. When the user invokes the cross-device desktop access function, the electronic device that is successfully paired with the first electronic device may be used as the to-be-selected electronic device for cross-device desktop access by the first electronic device.

Certainly, the to-be-selected electronic device may alternatively be an electronic device manually configured or added by the user. The user establishes a cross-device interface access permission sharing relationship between the first electronic device and the configured electronic device, and the user may manually customize management and control.

The cross-device interface access permission sharing relationship may be a unidirectional sharing relationship or a bidirectional sharing relationship, but is not limited thereto. During actual application, a function of selecting the unidirectional or bidirectional sharing relationship may also be opened to the user, so that the user can select one thereof based on a requirement.

For the second implementation, the user may send a request for a cross-device access permission sharing relationship to another electronic device by using a desktop sharing APP (the APP may be an APP specially used for desktop sharing, or the desktop sharing function may be added to some social APPs). After the desktop sharing APP of the another electronic device receives the request, a cross-device access permission sharing relationship between the first electronic device and the another electronic device may be established. It should be noted that the sharing relationship may be a unidirectional sharing relationship or a bidirectional sharing relationship, but is not limited thereto. During actual application, the user may even choose to use the unidirectional sharing relationship or the bidirectional sharing relationship based on a requirement. In this implementation, the desktop sharing APP of the electronic device may prestore device information (for example, a sharing APP account of a device) of a plurality of electronic devices in a manner of a single contact or a group contact, so that when there is a data sharing requirement, data sharing between the desktop sharing APP and a single device corresponding to the single contact or a plurality of electronic devices corresponding to the group contact can be implemented by sending a desktop sharing request to the single contact or the group contact.

During actual application, a desktop information sharing relationship between two devices generally can be established only after mutual authorization and verification between the two devices succeed. This can be implemented in a diversified manner and flexibly selected during actual application.

In step S101, the first electronic device sends the access request to the second electronic device, where the access request is used to request to access the desktop information of the second electronic device.

During actual application, a process in which the first electronic device generates the access request may include:

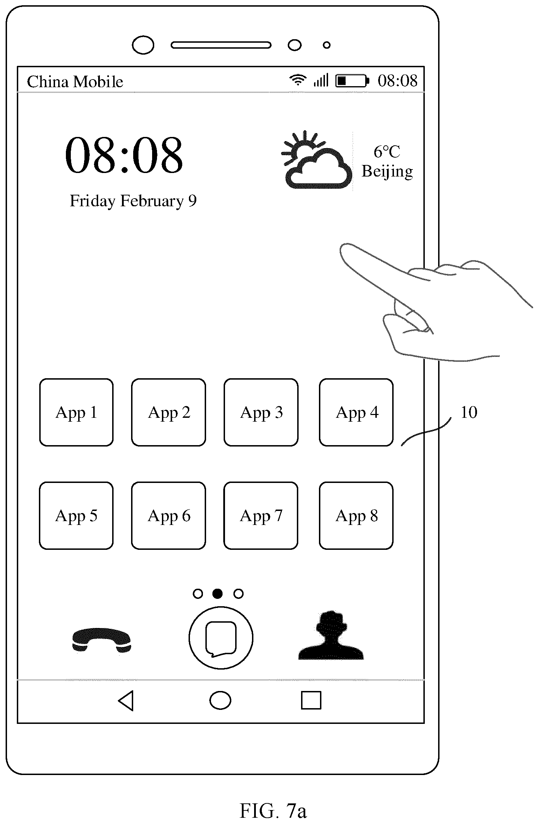

The user may perform a first preset operation on any desktop of the first electronic device, so that the first electronic device can enter a desktop editing mode. The first preset operation may be, for example, touching and holding a blank location on the desktop (for example, as shown in FIG. 7a), pinching two fingers together, tapping a specific button, pressing a specific physical button (or a combination of physical buttons), or a floating gesture. Certainly, the user may alternatively trigger, in another manner such as a voice command, the mobile phone to enter the desktop editing mode.

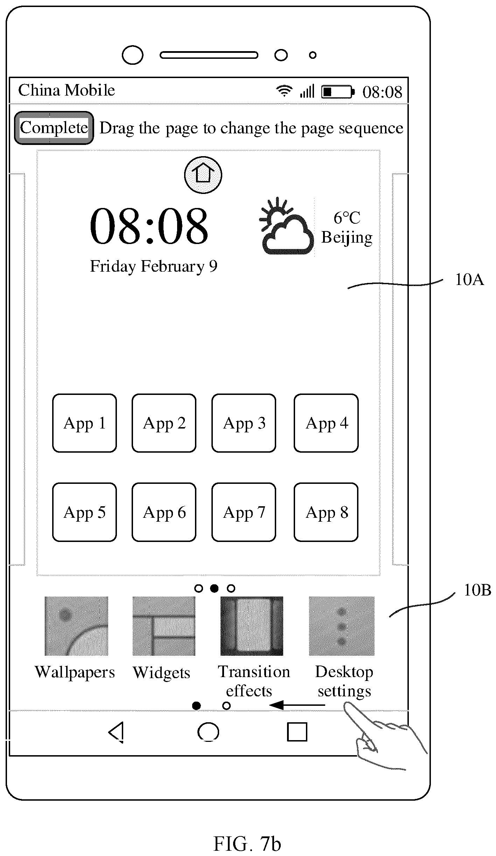

FIG. 7b is a schematic diagram of an example desktop on which a first electronic device enters a desktop editing mode.

After the mobile phone enters the desktop editing mode, the desktop editing interface is displayed. In this embodiment of this application, a display area of the first electronic device includes two areas. One area (for example, a first area 10A) may be used to display a real-time thumbnail of the desktop, and the other area (for example, a second area 10B) may be used by the user to perform an operation of editing the desktop, for example, selecting a wallpaper, adding a widget, selecting a transition effect, and enabling or disabling a related function. For example, the first area 10A and the second area 10B are arranged from top to bottom (as shown in FIG. 7a), and the first area 10A is located above or below the second area 10B; or the first area 10A and the second area 10B are arranged from left to right, and the first area 10A is located on the left or right of the second area 10B. Sizes of the first area 10A and the second area 10B may be the same or different. In an example, the first area 10A and the second area 10B do not overlap.

It may be understood that the second area 10B may also include some controls for the user to operate. The control may be a control for editing a desktop, or may be a control for operating a desktop thumbnail. In other words, in this embodiment of this application, functions and display content of the first area 10A and the second area 10B are not strictly distinguished. This helps optimize a layout of controls on the desktop editing interface, and improve user experience.

Different from the conventional technology, in this embodiment of the present invention, the second area 10B may be further used to implement cross-device desktop editing on another electronic device.

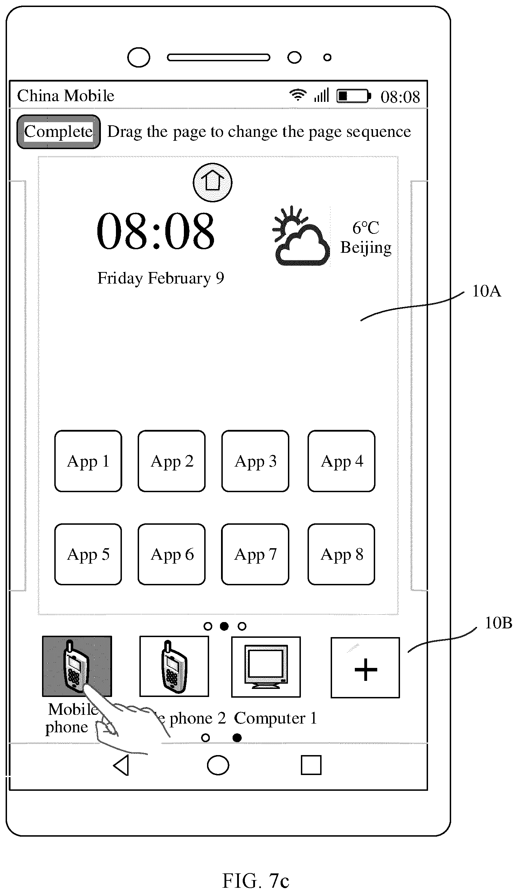

In an example, when the first electronic device enters the desktop editing mode, a control used by the first electronic device to perform desktop editing is first displayed in the second area 10B, for example, a wallpaper control, a widget control, a transition effect control, and a desktop setting control shown in FIG. 7b. After the user performs a second preset operation on the desktop editing interface, a page displayed in the second area 10B is switched to a page used to select an electronic device on which cross-device desktop editing is expected to be performed, so that the user can select, from the at least one to-be-selected electronic device, an electronic device on which cross-device desktop editing is to be performed. For details, refer to the second area 10B shown in FIG. 7c. The second area 10B shown in FIG. 7c displays option icons corresponding to to-be-selected electronic devices (for example, a mobile phone 1, a mobile phone 2, and a computer 1). The mobile phone 1, the mobile phone 2, and the computer 1 each correspond to one to-be-selected electronic device. The second preset operation may be sliding leftward, sliding rightward, sliding upward, sliding downward, pressing a specific physical button (or a combination of physical buttons), or the like in the second area 10B. In this embodiment of the present invention, the second preset operation is specifically sliding leftward.

For example, the second electronic device is the mobile phone 1. When the user selects an option icon corresponding to the mobile phone 1, it indicates that the user selects the mobile phone 1 as an object requesting to perform cross-desktop editing, to trigger the first electronic device to send the access request to the second electronic device.

In another implementation of the present invention, a display name of the to-be-selected electronic device (for example, the mobile phone 1) on the first electronic device may be further displayed as a name of a device account associated with the to-be-selected electronic device and/or a device type and/or a device model of the to-be-selected electronic device, and a display icon (for example, an icon corresponding to the mobile phone 1) of the to-be-selected electronic device on the first electronic device may be further displayed as an image of the device account associated with the to-be-selected electronic device or a device entity image corresponding to the device type and/or the device model of the to-be-selected electronic device. Certainly, in another implementation of the present invention, only a name corresponding to the to-be-selected electronic device may be displayed, or only an icon corresponding to the to-be-selected electronic device may be displayed. This may be specifically flexibly set, and is not limited in the present invention.

A "+" option shown in FIG. 7c is used by the user to add and manage a to-be-selected electronic device. When the user selects the "+" option, a new to-be-selected electronic device may be added.

In this embodiment of the present invention, the communication connection between the first electronic device and the second electronic device may be but is not limited to a communication connection in any connection mode such as Bluetooth, Wi-Fi (Wireless Fidelity, wireless fidelity), the internet, or a mobile network.

In this embodiment of the present invention, communication between the first electronic device and the second electronic device may also be implemented by using a third-party server, that is, information transfer between the first electronic device and the second electronic device is implemented by using the third-party server.

It should be noted that the first electronic device does not necessarily enter the desktop editing mode to send the access request to the second electronic device, for example, may send the access request to the second electronic device by using an APP used for desktop sharing, provided that cross-device desktop access can be performed on the second electronic device to initiate the access request.

In another embodiment of the present invention, when the first electronic device enters the desktop editing mode, the second area 10B may further directly enter a page (refer to FIG. 7c) used to select an electronic device on which cross-device editing is expected to be performed, and the user does not need to perform the second preset operation on the desktop editing interface shown in FIG. 7b.

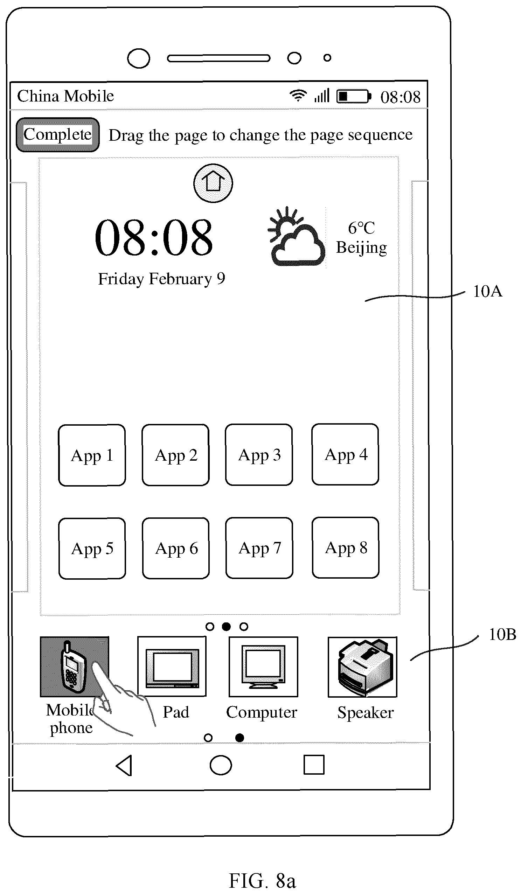

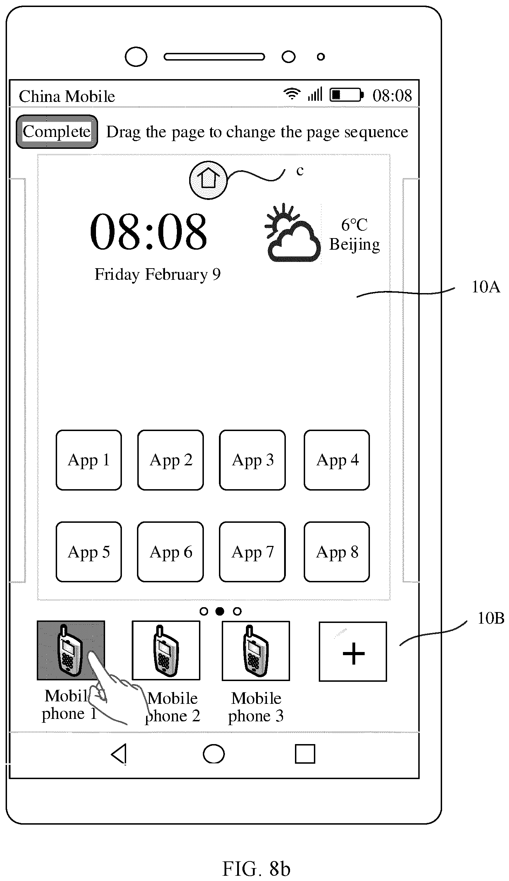

In another embodiment of the present invention, after the user performs the second preset operation on the desktop editing interface, the page displayed in the second area 10B may be further switched to a page used to select a device type of the electronic device on which cross-device editing is expected to be performed. For details, refer to FIG. 8a. For example, the device type of the electronic device may include but is not limited to a mobile phone, a pad, a computer, and a speaker. When the user selects a control corresponding to a mobile phone type, one or more mobile phone options are tiled under the control corresponding to the mobile phone type. For details, refer to FIG. 8b. After the user selects a corresponding mobile phone option, for example, the mobile phone 1, the first electronic device is triggered to send the access request to an electronic device (the second electronic device in this embodiment of the present invention) corresponding to the mobile phone 1. It may be understood that classification processing is performed on the to-be-selected electronic devices, so that the user can quickly find an electronic device expected to be selected, thereby improving user experience.

In step S102, the second electronic device receives the access request of the first electronic device, and returns the desktop information to the first electronic device based on the access request.

After receiving the access request of the first electronic device, the second electronic device may first perform verification on the access request of the first electronic device, and after the verification succeeds, send the desktop information to the first electronic device, so as to ensure security. Certainly, the second electronic device may alternatively directly send the desktop information to the first electronic device in response to the access request of the first electronic device.

The desktop information may include but is not limited to a desktop UI (User Interface, user interface) information part and a desktop data part. The desktop UI information part may include but is not limited to one or more of a desktop layout description parameter, each status bar, a widget, a navigation bar, a navigation button, and a location parameter and size information of an application icon. The desktop data part has a specific data structure, for example, each status bar, a widget (widget), wallpaper information, and application icon information. Application information includes any one or more of a data location, a type, a package name (Package Name), and an installation package of an application. Certainly, in this embodiment of the present invention, the desktop information may further include a UI information part and a data part of a lock screen interface and/or an AOD interface, for example, a layout description parameter of the lock screen interface. This is not specifically limited in the present invention.

In step S103, the first electronic device receives the desktop information sent by the second electronic device, and displays the desktop of the second electronic device based on the desktop information.

The desktop of the second electronic device that is displayed by the first electronic device based on the desktop information is not equivalent to the desktop of the second electronic device. For example, a thumbnail or a schematic diagram of some content of the desktop of the second electronic device may be displayed. This is specifically determined according to a drawing rule of a window manager of the first electronic device.

The desktop of the second electronic device that is displayed by the first electronic device based on the desktop information may be some or all of desktops of the second electronic device.

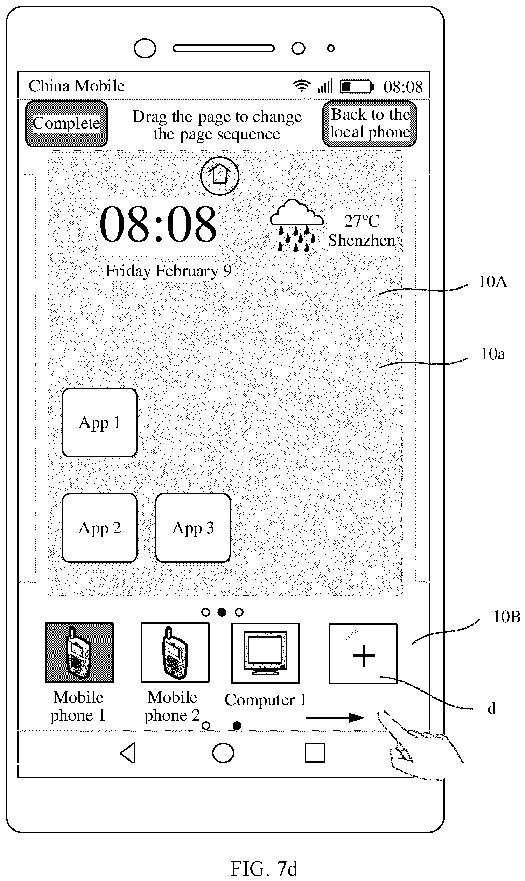

In an example, after the first electronic device obtains the desktop information of the second electronic device, the window manager of the first electronic device draws a thumbnail of the desktop of the second electronic device based on the desktop information of the second electronic device, and displays the drawn thumbnail of the desktop of the second electronic device in the first area 10A (refer to FIG. 7d), that is, the first electronic device switches from displaying a thumbnail of a desktop of the first electronic device to displaying the thumbnail of the desktop of the second electronic device.

For example, a page 10a is displayed in the middle of the first area 10A of the interface shown in FIG. 7d, and is the thumbnail of the desktop of the second electronic device. Specifically, the page 10a includes an application icon, a widget, and the like of the desktop. The user may edit the application icon and the widget of the desktop on the page 10a. An editing method is described below, and is not described herein. Other pages are further displayed on the left and right of the page 10a, and separately correspond to other desktops of the second electronic device. The user may switch, by using a gesture of sliding leftward or rightward, a page displayed in the middle, and a desktop corresponding to the page displayed in the middle is a desktop that is being edited.

The page 10a may not include an application icon in a dock bar on the desktop, that is, the application icon in the dock bar on the desktop cannot be edited on the desktop editing interface. Certainly, in this application, the page 10a may alternatively include the application icon in the dock bar on the desktop, that is, the application icon in the dock bar on the desktop may be edited on the desktop editing interface. Editing of the application icon in the dock bar is also described in detail below.

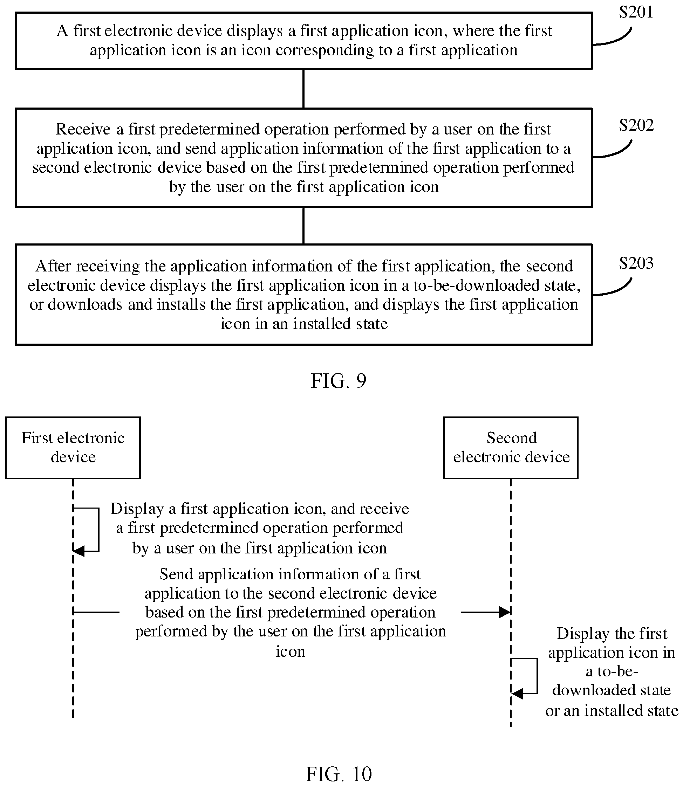

For example, when the first electronic device displays the drawn thumbnail of the desktop of the second electronic device in the first area 10A, a control used to help the user return to a desktop thumbnail corresponding to a local device is displayed in an upper right corner of the first area 10A. When the user taps or presses the control used to return to the local device on the interface shown in FIG. 10d, content displayed in the first area 10A is switched to the thumbnail of the desktop of the first electronic device. Certainly, in another embodiment of the present invention, to facilitate returning to the desktop thumbnail corresponding to the local device, the second area 10B of the interface shown in FIG. 7d may further include an option icon corresponding to the first electronic device. When the user taps or presses the option icon corresponding to the first electronic device on the interface shown in FIG. 10B, content displayed in the first area 10A is switched to the thumbnail of the desktop of the first electronic device.

In step S104, the first electronic device receives the editing operation performed by the user on the displayed desktop of the second electronic device, generates the desktop editing information based on the editing operation performed by the user on the desktop of the second electronic device, and sends the desktop editing information to the second electronic device.

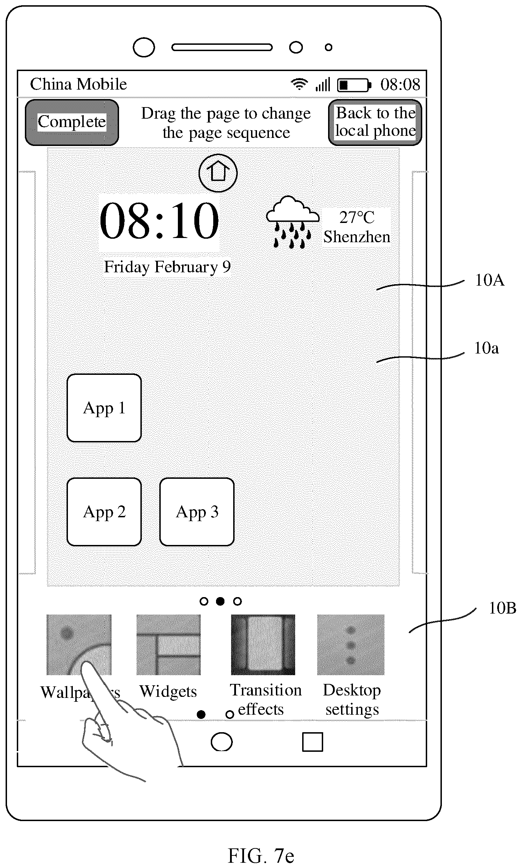

In an example, after the first area 10A of the first electronic device displays the desktop of the second electronic device, the user may perform a third preset operation on the interface displayed in FIG. 7d, so that the interface displayed in the second area 10B can be switched to an interface that can be used by the user to perform an operation of editing the desktop, for example, a wallpaper control icon, a widget control icon, a transition effect control icon, and a desktop setting control icon shown in FIG. 7e.

The third preset operation may be sliding leftward, sliding rightward, sliding upward, sliding downward, pressing a specific physical button (or a combination of physical buttons), or the like in the second area 10B. In this embodiment of the present invention, the third preset operation is specifically sliding rightward.

In another implementation, when the first area 10A of the first electronic device displays the desktop of the second electronic device, the user may not perform the third preset operation, but directly switches to content that can be used by the user to edit the desktop, for example, a wallpaper control icon, a widget control icon, a transition effect control icon, and a desktop setting control icon shown in FIG. 7e.

It may be understood that, in this embodiment of the present invention, after the first electronic device displays the thumbnail of the desktop of the second electronic device in the first area 10A, the first electronic device may switch, based on a third predetermined operation performed by the user, a selection page that is displayed in the second area 10B and that is used to perform cross-device desktop editing to a page used to perform an operation of editing the desktop, for example, selecting a wallpaper, adding a desktop widget, selecting a transition effect, and enabling or disabling a related function. Alternatively, when the first electronic device displays the thumbnail of the desktop of the second electronic device in the first area 10A, the first electronic device automatically switches a page part that is in the second area 10B and that is used to select an electronic device on which cross-device desktop editing needs to be performed to a page part that is used by the user to perform an operation of editing the desktop. In this way, when editing the desktop of the second electronic device, the user can quickly operate a corresponding option. For example, one or more wallpaper options are tiled under a wallpaper control, and the user may directly tap a corresponding wallpaper option to directly change a wallpaper of the desktop. If the user wants to view more options under other editing controls, the user may use the control to collapse the options under the wallpaper control. If the user wants to view options under an editing control (for example, a transition effect editing control), the user may also expand more options under the editing control by using an expansion control corresponding to the editing control.

The first electronic device may include any one or more of the following cross-desktop editing functions. This is not limited in this embodiment of this application.

### 1. Change a desktop wallpaper.

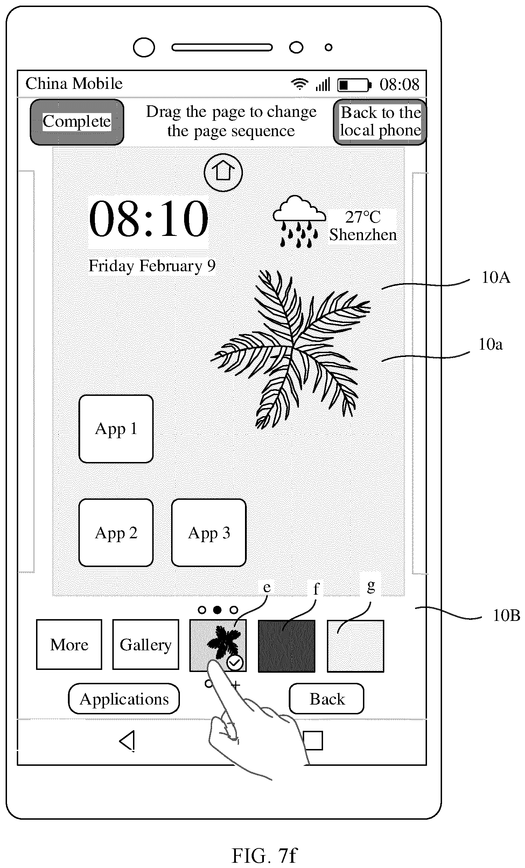

As shown in FIG. 7e, in response to an operation of tapping a wallpaper control by the user on the interface shown in FIG. 7e, the first electronic device may display a wallpaper editing interface shown in FIG. 7f. The second area 10B displays a plurality of options on the interface, for example, a "more" option, a "gallery" option, a "wallpaper e" option, a "wallpaper f" option, and a "wallpaper" option. Each wallpaper option corresponds to one wallpaper, and the user may select a corresponding wallpaper by using these options, to apply the wallpaper to the desktop of the second electronic device. "Gallery" includes pictures locally stored in the first electronic device. When the user selects the "gallery" option, the pictures locally stored in the first electronic device are expanded in the "gallery" option for the user to select. The "more" option may provide network pictures for the user. When the user selects the "more" option, the network pictures are expanded in the "gallery" option for the user to select.

It may be understood that a preview effect displayed in real time based on editing performed by the user on the desktop is displayed on a page in the first area 10A that corresponds to the desktop.

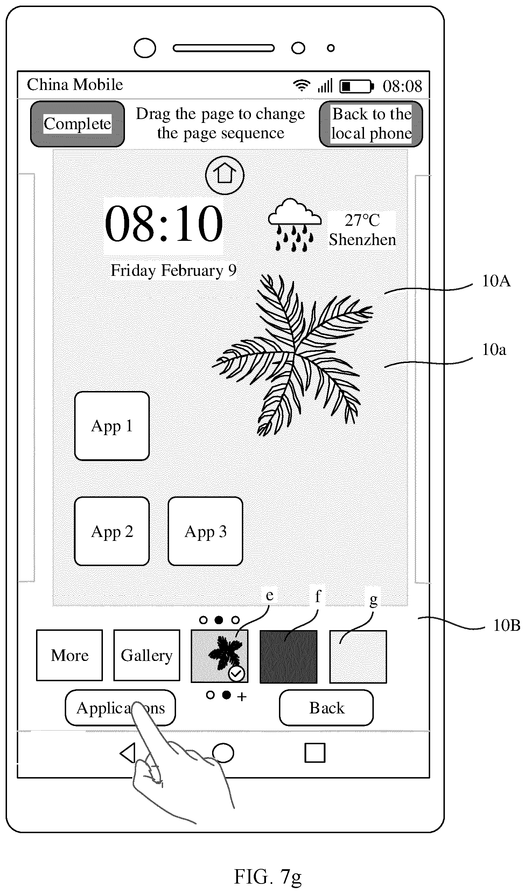

When selecting an expected wallpaper, for example, the "wallpaper e" option, the user may confirm a setting operation on the selected wallpaper by using an application control shown in FIG. 7g. Certainly, the user may further return to the interface shown in FIG. 7e by using a return control shown in FIG. 7g.

Certainly, the user may alternatively perform other setting on the selected wallpaper, for example, blurring or scrolling. In this case, these effects may also be displayed in real time in the first area 10A. Details are not described in this embodiment of this application.

### 2. Add or delete a widget.

Still refer to in FIG. 7e. The first electronic device may display a plurality of widgets in response to an operation of tapping a widget control by the user. Widgets have a same size or different sizes. That is, the widgets occupy different areas on the desktop. In this case, when the widget is added to the desktop, aesthetics and applicability of the desktop layout may be affected. Therefore, in this application, the user may determine, by using a real-time preview image of the desktop of the second electronic device in the first area 10A, whether to add a location of a widget, whether to delete a widget, or the like. The widgets include a clock widget, a weather widget, a mailbox widget, a browser widget, a memo widget, and another tool commonly used by the user.

For example, the user may add a corresponding widget to a corresponding page in the first area 10A in a tap or drag manner. That is, the user may view an effect drawing displayed after a corresponding widget is added to each desktop. Certainly, the user may alternatively touch and hold a widget on each page in the first area 10A, and drag the widget to a deletion control that appears in the first area 10A, to delete the widget from the page. That is, an effect drawing displayed on the page after the widget is deleted from the desktop.

### 3. Modify a desktop transition effect.

Still refer to the interface shown in FIG. 7e. In response to an operation of tapping a transition effect control by the user, the first electronic device expands and displays options of a plurality of transition effects in the second area 10B. The user may select an option of a corresponding transition effect, so that the user can view a desktop transition effect when switching is performed between different pages in the first area 10A.

### 4. Set a desktop layout.

Still refer to the interface shown in FIG. 7e. The first electronic device sets the desktop of the second electronic device in response to an operation of tapping a desktop setting control by the user. After the user modifies a desktop layout setting option, the first electronic device immediately modifies and displays the desktop layout.

### 5. Modify an application icon.

Still refer to the interface shown in FIG. 7e. The modifying an application icon on the desktop of the second electronic device may include: modifying a location of the application icon on the desktop, or deleting the application icon on the desktop.

The modifying a location of the application icon on the desktop may be: The user selects any one or more application icons on a page, and drags the selected application icon to another page in a touch-and-hold manner. Alternatively, the user may select any one or more application icons on a page, and drag the selected application icon to another location on the page in a touch-and-hold manner. Alternatively, when there is an empty location in a dock bar, the user may move an application icon in a non-dock bar to the dock bar. Alternatively, the user may move both a selected application icon in a dock bar and another application icon in a non-dock bar to another desktop.

The deleting the application icon on the desktop may be specifically: touching and holding an application icon that needs to be deleted to select the application icon that needs to be deleted, displaying a deletion badge such as a "×" badge on the application icon, and tapping the "×" badge to delete the application icon and uninstall an application corresponding to the application icon; or after the user selects one or more application icons, displaying a deletion area, and dragging the one or more application icons to the deletion area to delete the application icon and uninstall an application corresponding to the application icon. The first electronic device displays a change of the application icon on the desktop in real time.

It should be learned that the following editing functions included in the first electronic device for the desktop of the second electronic device are not limited to the foregoing listed functions, and are not listed one by one in the present invention.

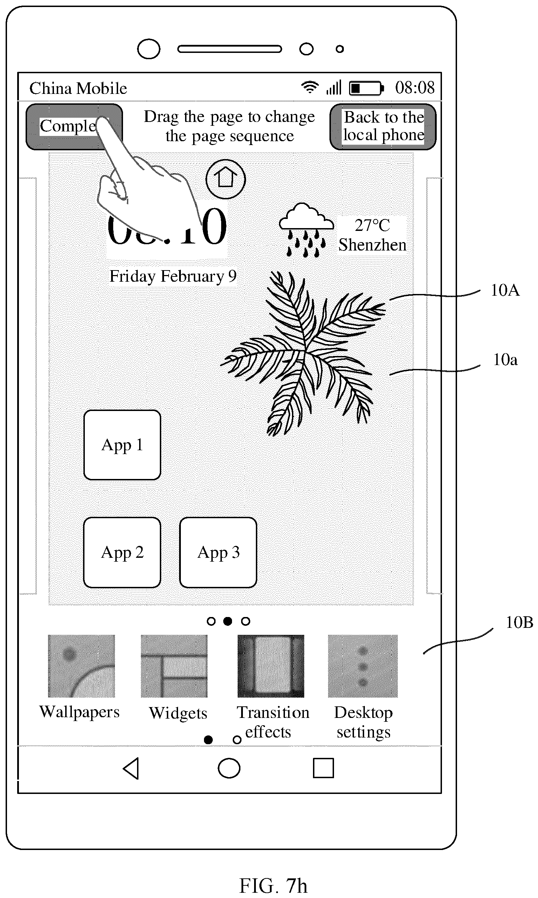

As shown in FIG. 7h, in this embodiment of the present invention, in a process of performing desktop editing on the second electronic device by the first electronic device, the first electronic device may further display a completion button used to confirm the desktop editing operation. After the user selects the completion button in a manner such as tapping or pressing, the first electronic device may be triggered to generate desktop editing information based on the desktop editing operation performed by the user on the second electronic device, and send the desktop editing information to the second electronic device.

It should be noted that an example in which the desktop editing information is sent to the second electronic device only after the completion button is tapped is used herein for description. In another implementation of the present invention, an instant synchronization manner may be used. To be specific, after the user performs desktop editing on the first electronic device, the desktop editing information is instantly generated and sent to the second electronic device without tapping the completion button for trigger, and the second electronic device synchronously updates desktop setting of the second electronic device based on the desktop editing information.

In step S105, the second electronic device adjusts the desktop of the second electronic device based on the desktop editing information.

In a specific implementation process, after receiving the desktop editing information, the second electronic device may first perform permission verification on the second electronic device, and after the permission verification succeeds, perform validity verification on the desktop editing information. Specifically, the second electronic device may perform validity verification on a data structure of the desktop editing information, and after the validity verification succeeds, store the desktop editing information, and adjust the desktop based on the desktop editing information, for example, perform any one or more of the following: changing a wallpaper, adding or deleting a widget, modifying a desktop transition effect, setting a desktop layout, and modifying an application icon. The window manager redraws an interface corresponding to each window based on the desktop editing information, and sends the drawn interface to a display driver at a kernel layer. The display driver invokes a screen for display, so as to implement cross-device desktop adjustment.

It should be known that, in this embodiment of the present invention, after receiving the desktop editing information, the second electronic device may not necessarily perform permission verification on the first electronic device and/or perform validity verification on the data structure of the desktop editing information.

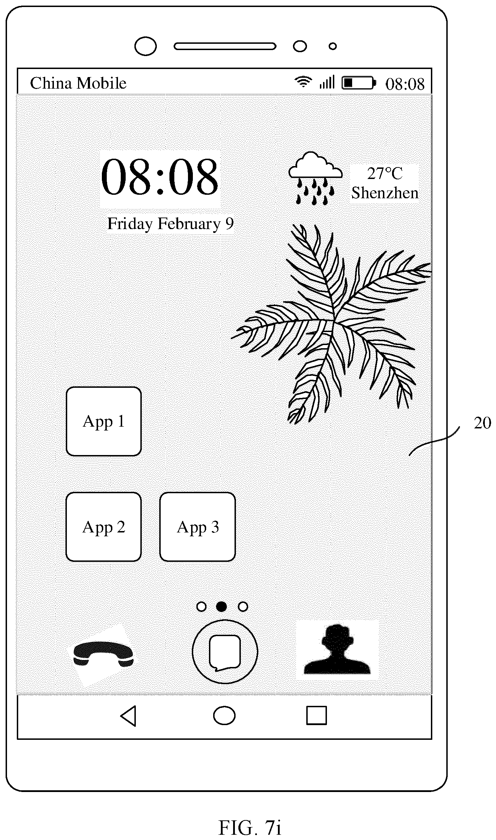

FIG. 7i is a schematic diagram of a desktop obtained after cross-desktop editing is performed between the second electronic device and the first electronic device. As shown in FIG. 7i, after the user sets the wallpaper of the second electronic device on the first electronic device, the wallpaper of the desktop 20 of the second electronic device is changed from the wallpaper shown in FIG. 6 to a wallpaper shown in FIG. 7i.

It may be understood that, by using the cross-device desktop management method in this embodiment of the present invention, cross-desktop management between electronic devices can be implemented, and a desktop of another electronic device can be remotely edited, so as to achieve more efficient and convenient user experience.

FIG. 9 is another flowchart of a cross-device desktop management method according to this application. FIG. 10 is another interactive flowchart of a cross-device desktop management method according to this application.

As shown in FIG. 9 and FIG. 10, the cross-device desktop management method provided in this application may include the following steps:
Step S201: A first electronic device displays a first application icon, where the first application icon is an icon corresponding to a first application.
Step S202: Receive a first predetermined operation performed by a user on the first application icon, and send application information of the first application to a second electronic device based on the first predetermined operation performed by the user on the first application icon.
Step S203: After receiving the application information of the first application, the second electronic device displays the first application icon in a to-be-downloaded state, or downloads and installs the first application, and displays the first application icon in an installed state.

In this embodiment of the present invention, the application information of the first application may include but is not limited to installation information of the first application and/or interface invoking information of the first application. After receiving the interface invoking information of the first application, the second electronic device may display the first application icon corresponding to the first application on a desktop based on the interface invoking information. The first application icon may present different states based on whether the first application is installed; and if the first application is not installed, the first application icon may present a to-be-downloaded state; or if the first application is installed, the first application icon may present an installed state. The installation information of the first application includes an installation link or an installation package of the first application.

It may be understood that the cross-device desktop management method provided in this embodiment of the present invention can implement sharing of an application between devices. This is convenient, and improves user experience.

In step S201, the first electronic device displays the first application icon, where the first application icon is the icon corresponding to the first application.

The first application is an application that is installed on the first electronic device and that is displayed on a desktop of the first electronic device.

In an example, before step S202, the user may perform a first preset operation on any desktop of the first electronic device, so that the first electronic device can enter a desktop editing mode. After entering the desktop editing mode, the mobile phone enters a desktop editing interface, and displays an option icon corresponding to a to-be-selected electronic device on the desktop editing interface (refer to FIG. 7a to FIG. 7c and FIG. 8a and FIG. 8b). For implementation processes of the first predetermined operation, the desktop editing interface, and the option icon corresponding to the to-be-selected electronic device, refer to the foregoing corresponding content. To avoid repetition, details are not described herein again.

In step S202, the first predetermined operation performed by the user on the first application icon is received, and the application information of the first application is sent to the second electronic device based on the first predetermined operation performed by the user on the first application icon.

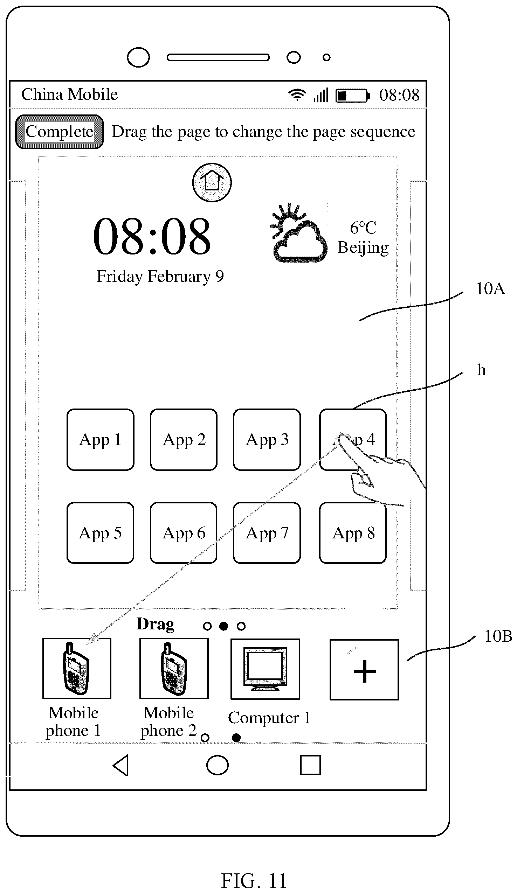

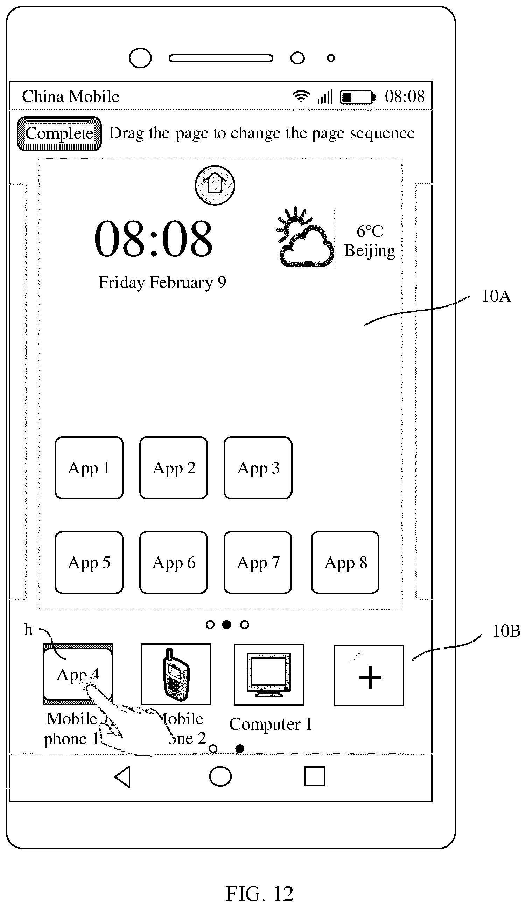

As shown in FIG. 11, that the second electronic device is a mobile phone 1 is used as an example. The first predetermined operation performed by the user on the first application icon may be: The user selects a first application icon h, and drags the first application icon h to a corresponding area of an option icon corresponding to the second electronic device in a second area 10B in a touch-and-hold manner. As shown in FIG. 12, the user drags the first application icon h above the option icon corresponding to the mobile phone 1, and then releases the first application icon h, to trigger the first electronic device to send application information corresponding to the first application icon h to the second electronic device, so as to share the first application h of the first electronic device with the second electronic device. There may be one or more first application icons h selected by the user.

In step S203, after receiving the application information of the first application, the second electronic device displays the first application icon in the to-be-downloaded state, or downloads and installs the first application, and displays the first application icon in the installed state.

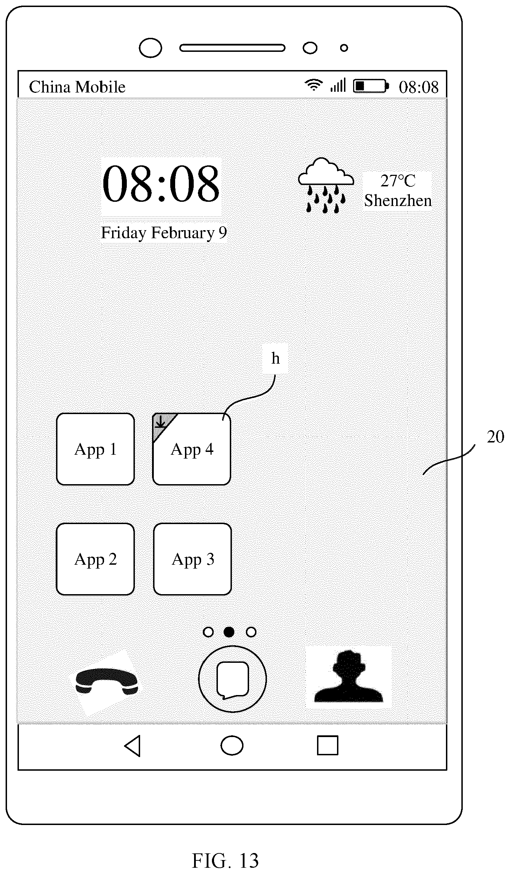

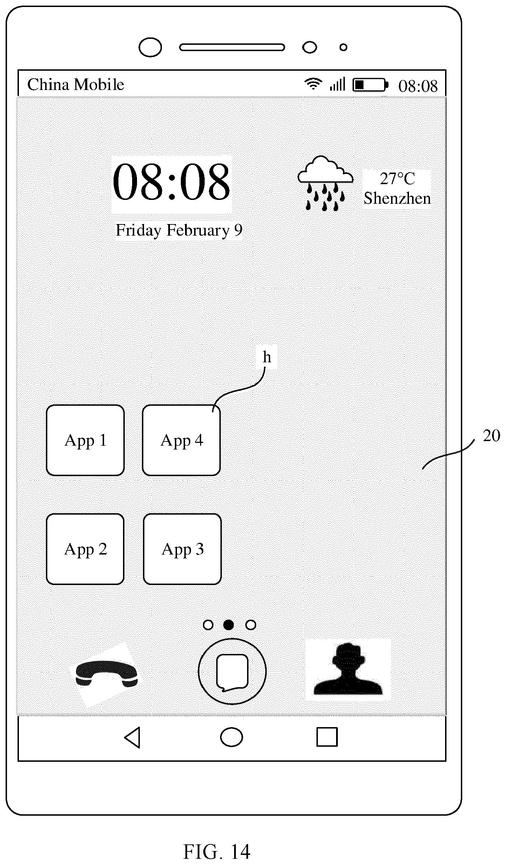

FIG. 13 is a schematic diagram of another example desktop of a second electronic device according to this application. FIG. 14 is a schematic diagram of another example desktop of a second electronic device according to this application. FIG. 13 shows an example in which the first application icon h is displayed in the to-be-downloaded state. FIG. 14 shows an example in which the first application icon h is displayed in the installed state.

In this embodiment of the present invention, that after receiving the application information of the first application, the second electronic device displays the first application icon in a to-be-downloaded state, or downloads and installs the first application, and displays the first application icon in an installed state may include:
Step S2021: After receiving the application information corresponding to the first application icon, the second electronic device determines whether the first application is installed; and if yes, performs step S2022; or if no, performs step S2023.
Step S2022: The second electronic device sends a first message to the first electronic device, where the first message is used to indicate that the first application is installed on the first electronic device, and then performs step 2024.
Step S2023: The second electronic device displays the first application icon in the to-be-downloaded state, or downloads and installs the first application based on application information of the first application, and displays the first application icon in the installed state.
Step S2024: The first electronic device generates prompt information based on the first message, where the prompt information is used to prompt that sharing of the first application fails.

In a specific implementation process, after receiving the application information of the first application, the second electronic device may first perform permission verification on the first electronic device, and after the permission verification succeeds, determine whether the first application is installed. If the second electronic device determines that the first application is not installed, the second electronic device performs validity verification on a data structure of the application information of the first application. After the validity verification succeeds, the second electronic device displays the first application icon in the to-be-downloaded state based on the application information of the first application, or directly downloads and installs the first application, and then displays the first application icon in the installed state based on the application information of the first application.

If the permission verification performed by the second electronic device on the first electronic device fails, or the first application is installed on the second electronic device, or the validity verification performed on the data structure of the application information of the first application fails, the second electronic device may return the first message to the first electronic device. The first message is used to prompt the first electronic device that the permission verification on the first electronic device fails, or the first application is installed on the second electronic device, or the data structure of the application information of the first application is incorrect, to notify the first electronic device that cross-device sharing of the first application fails. After receiving the first message, the second electronic device generates the prompt information to prompt the user that sharing of the first application fails.

It should be understood that, in this embodiment of the present invention, after receiving the application information corresponding to the first application icon, the second electronic device may not necessarily perform permission verification on the first electronic device and/or perform validity verification on the data structure of the application information of the first application.

When the second electronic device displays the first application icon in the to-be-downloaded state, the second electronic device may query the user whether to download the first application based on the application information. After being permitted by the user, the second electronic device may download and install the first application when there is a network connection. If the application information includes an installation package of the first application, the second electronic device may directly install the first application based on the installation package after being permitted by the user.

When the second electronic device displays the first application icon in the installed state, the second electronic device may download and install the first application when there is a network connection without permission of the user. If the application information includes an installation package of the first application, the second electronic device may directly download and install the first application based on the installation package without a network connection.

In this embodiment of the present invention, the cross-device desktop management method may further include the following steps:
Step S204: The first electronic device receives a second message of the second electronic device, where the second message is used to indicate that the first electronic device successfully shares the first application with the second electronic device.
Step S205: The first electronic device uninstalls the first application.

It may be understood that, in this embodiment of the present invention, after the first application selected by the user is successfully shared with the second electronic device, the first application on the first electronic device is deleted. This is applicable to a scenario in which the user does not need to use the first application on the first electronic device and the second electronic device at the same time, thereby reducing use of memory space of the first electronic device.

In another implementation of the present invention, sharing of an application is not limited to a desktop editing mode. For example, in this embodiment of this application, a function of "one-click sharing across devices" may be further set, so as to implement sharing of the application.

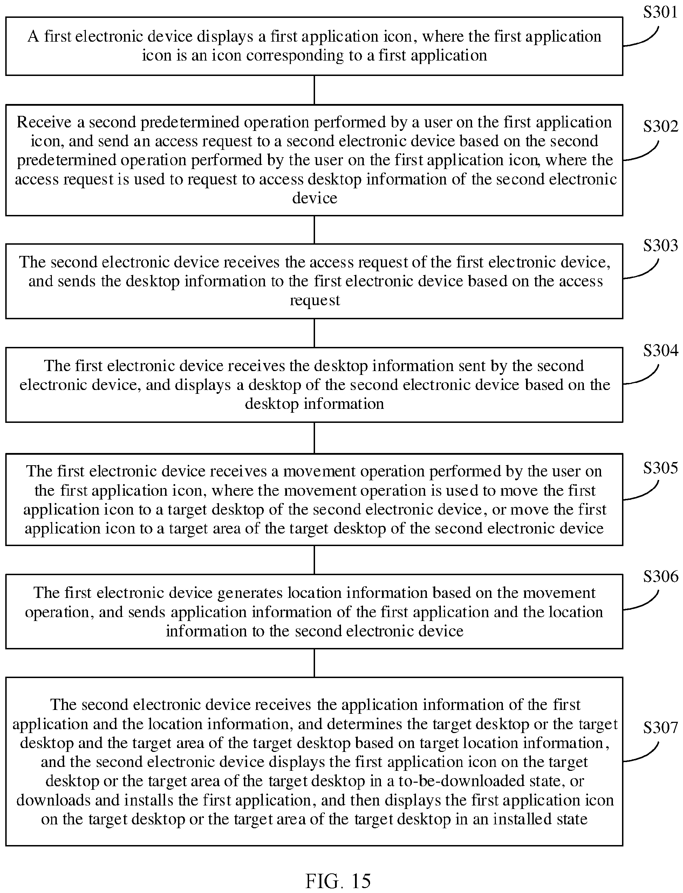

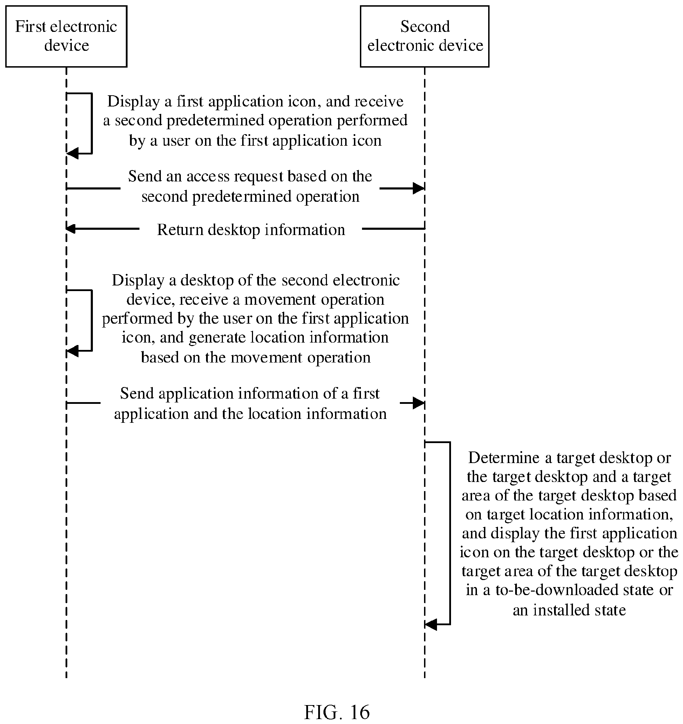

FIG. 15 is another flowchart of a cross-device desktop management method according to this application. FIG. 16 is another interactive flowchart of a cross-device desktop management method according to this application.

As shown in FIG. 15 and FIG. 16, the cross-device desktop management method provided in this application may include the following steps:
Step S301: A first electronic device displays a first application icon, where the first application icon is an icon corresponding to a first application.
Step S302: Receive a second predetermined operation performed by a user on the first application icon, and send an access request to a second electronic device based on the second predetermined operation performed by the user on the first application icon, where the access request is used to request to access desktop information of the second electronic device.
Step S303: The second electronic device receives the access request of the first electronic device, and sends the desktop information to the first electronic device based on the access request.
Step S304: The first electronic device receives the desktop information sent by the second electronic device, and displays at least one desktop of the second electronic device based on the desktop information.
Step S305: The first electronic device receives a movement operation performed by the user on the first application icon, where the movement operation is used to move the first application icon to a target desktop of the second electronic device, or move the first application icon to a target area of the target desktop of the second electronic device.
Step S306: The first electronic device generates location information based on the movement operation, and sends application information of the first application and the location information to the second electronic device.
Step S307: The second electronic device receives the application information of the first application and the location information, and determines the target desktop or the target desktop and the target area of the target desktop based on target location information. The second electronic device displays the first application icon on the target desktop or the target area of the target desktop in a to-be-downloaded state, or downloads and installs the first application, and then displays the first application icon on the target desktop or the target area of the target desktop in an installed state.

It may be understood that the cross-desktop management method provided in this embodiment of the present invention is used to access and display a desktop of another electronic device by using a predetermined gesture, so as to specify a desktop location at which an application icon is displayed on the second electronic device, provide the user with refined experience of cross-device application sharing, and implement cross-device application sharing in different application scenarios.

In this embodiment of the present invention, the application information of the first application may include but is not limited to installation information of the first application and/or interface invoking information of the first application. After receiving the interface invoking information of the first application, the second electronic device may display, on the desktop based on the interface invoking information, a first application icon corresponding to the first application (the first application icon presents different states based on whether the first application is installed; and if the first application is not installed, the first application icon may present a to-be-downloaded state; or if the first application is installed by the second electronic device, the first application icon may present an installed state). The installation information of the first application includes an installation link or an installation package of the first application.

In step S301, the first electronic device displays the first application icon, where the first application icon is the icon corresponding to the first application.

The first application is an application that is installed on the first electronic device and that is displayed on a desktop of the first electronic device.

In an example, before step S302, the user may perform a first preset operation on any desktop of the first electronic device, so that the first electronic device can enter a desktop editing mode. After entering the desktop editing mode, the mobile phone enters a desktop editing interface, and displays an option icon corresponding to a to-be-selected electronic device on the desktop editing interface (refer to FIG. 7a to FIG. 7c and FIG. 8a and FIG. 8b). For implementation processes of the first predetermined operation, the desktop editing interface, and the option icon corresponding to the to-be-selected electronic device, refer to the foregoing corresponding content. To avoid repetition, details are not described herein again.

In step S302, the second predetermined operation performed by the user on the first application icon is received, and the access request is sent to the second electronic device based on the second predetermined operation performed by the user on the first application icon, where the access request is used to request to access the desktop information of the second electronic device.

As shown in FIG. 11, that the second electronic device is a mobile phone 1 is used as an example. The second predetermined operation performed by the user on the first application icon may be: The user selects a first application icon h, and then drags the first application icon h to a corresponding area of an option icon corresponding to the second electronic device in a second area 10B in a touch-and-hold manner. Then, as shown in FIG. 12, the user continues to stay in the corresponding area of the option icon corresponding to the second electronic device in the second area 10B in a touch-and-hold manner, and when stay duration reaches first preset duration, triggers the first electronic device to send the access request to the second electronic device. The first preset duration may be, for example, 1 second, 2 seconds, or 3 seconds. There may be one or more first application icons h selected by the user.

Step S303 and step S304 are respectively the same as step S102 and step S103 described above. For implementation processes of step S303 and step S304, refer to the foregoing corresponding descriptions. To avoid repetition, details are not described herein again.

In step S304, in this embodiment of the present invention, after receiving the desktop information sent by the second electronic device, the first electronic device may further determine, based on the desktop information of the second electronic device, whether the first application is installed on the second electronic device, where the desktop information of the second electronic device includes application information of the second electronic device. If the first application is not installed on the second electronic device, the first electronic device displays the desktop of the second electronic device. If the first application is installed on the second electronic device, the first electronic device generates prompt information to prompt the user that the first application is installed on the second electronic device. Certainly, the foregoing process may be unnecessary, and the first electronic device may directly display the desktop of the second electronic device based on the desktop information sent by the second electronic device.

In step S305, the first electronic device receives the movement operation performed by the user on the first application icon, where the movement operation is used to move the first application icon to the target desktop of the second electronic device, or move the first application icon to the target area of the target desktop of the second electronic device.

The second predetermined operation and the movement operation may be a continuous operation.

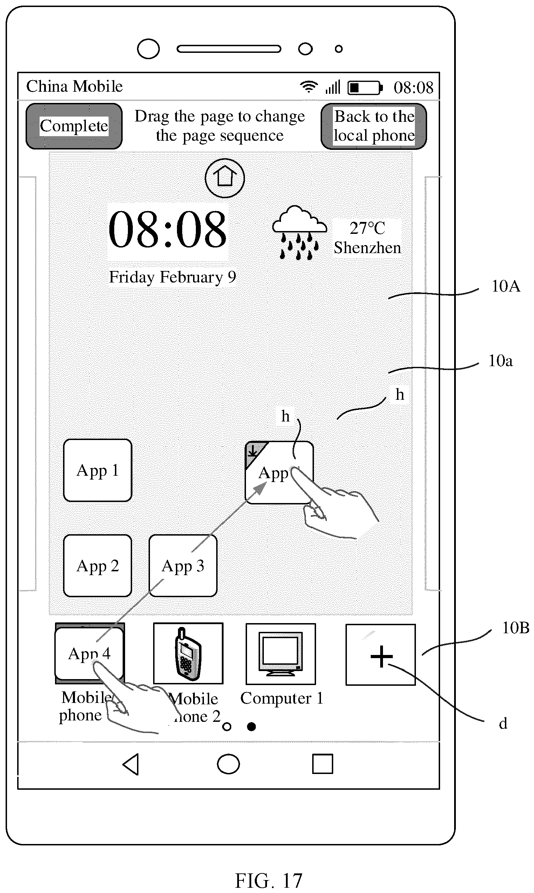

As shown in FIG. 17, in an example, the movement operation may be: After the desktop of the second electronic device is displayed in a first area 10A of the first electronic device, the user may continue to move, in a touch-and-hold manner, the first application icon to the desktop of the second electronic device that is displayed in the first area 10A. Generally, the first area 10A displays only a thumbnail of one desktop of the second electronic device, for example, a page 10a. When the desktop of the second electronic device that is currently displayed in the first area 10A is the target desktop expected by the user, the user may continue to move, in a touch-and-hold manner, the first application icon to the desktop of the second electronic device that is currently displayed in the first area 10A. If the user wants to select another desktop of the second electronic device, the user may move the first application icon to the left or right of the page 10a in a touch-and-hold manner and stay. When stay duration reaches second preset duration, the first area 10A of the first electronic device may be switched to a thumbnail of the another desktop of the second electronic device, so as to select the target desktop. The second preset duration may be, for example, 1 second, 2 seconds, or 3 seconds.

In this embodiment of the present invention, the user may not only specify a desktop on which the first application icon is displayed in the second electronic device after sharing, but also specify a desktop location at which the first application icon is displayed in the second electronic device. The user may drag the first application icon to a target (expected) area of a to-be-selected target desktop in a touch-and-hold manner, so as to select the target desktop and the target area of the target desktop. For details, refer to FIG. 17.

In step S306, the first electronic device generates the location information based on the movement operation, and sends the application information of the first application and the location information to the second electronic device.

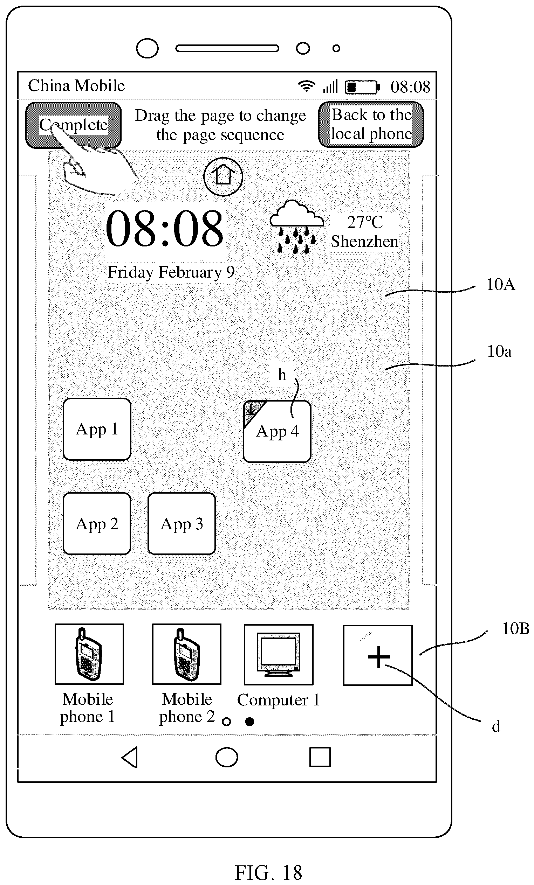

As shown in FIG. 18, in an example, after moving the first application icon to the target desktop of the second electronic device, or moving the first application icon to the target area of the target desktop of the second electronic device, the user taps or presses a completion control in FIG. 18, so as to trigger the first electronic device to generate the location information based on the movement operation performed by the user on the first application icon, and send the location information to the second electronic device. The location information includes information about selection performed by the user on the target desktop, or information about selection performed by the user on the target desktop and the target area of the target desktop. The information about selection on the target desktop may be an identifier (for example, a desktop number) of the target desktop, and the information about selection on the target area of the target desktop may be coordinate location information of the target area on the target desktop.

It should be known that, after moving the first application icon to the target desktop of the second electronic device, or moving the first application icon to the target area of the target desktop of the second electronic device, the user may further perform another desktop editing operation on the desktop of the second electronic device, for example, the foregoing desktop editing operation such as changing a wallpaper, adding or deleting a widget, or modifying an application icon. After completing the desktop editing operation, the user may tap or press the completion control in FIG. 18, to generate the desktop editing information and send the desktop editing information to the second electronic device. The desktop editing information includes at least the location information and the application information of the first application.

It should be further noted that an example in which the application information and the location information are sent to the second electronic device only after the completion button is tapped is used herein for description. In another implementation of the present invention, after the user drags the first application icon on the first electronic device to the target (expected) area of the to-be-selected target desktop, the first electronic device instantly sends the application information of the first application to the second electronic device without tapping the completion button for trigger. If the user further needs to perform another desktop editing operation on the desktop of the second electronic device, the desktop editing information may also be instantly generated and sent to the second electronic device based on the desktop editing operation performed by the user, and the second electronic device synchronously updates desktop setting of the second electronic device based on the desktop editing information.

In step S307, the second electronic device receives the application information of the first application and the location information, and determines the target desktop or the target desktop and the target area of the target desktop based on the target location information. The second electronic device displays the first application icon on the target desktop or the target area of the target desktop in the to-be-downloaded state, or downloads and installs the first application, and then displays the first application icon on the target desktop or the target area of the target desktop in the installed state.

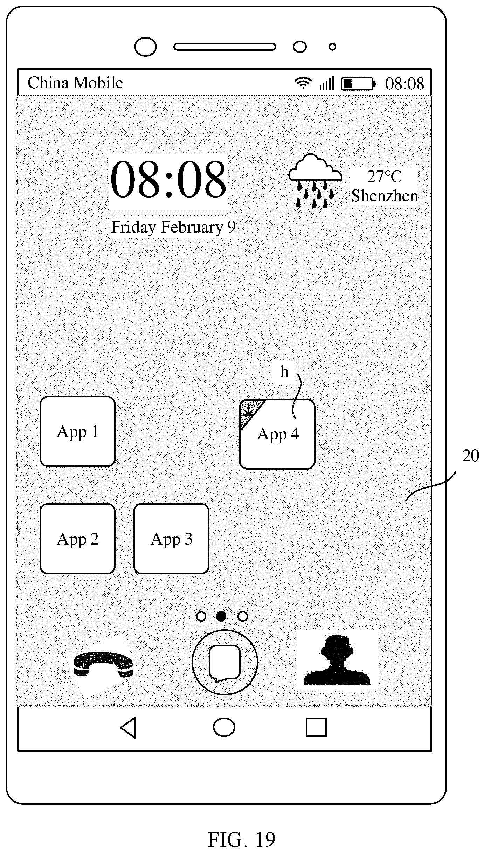

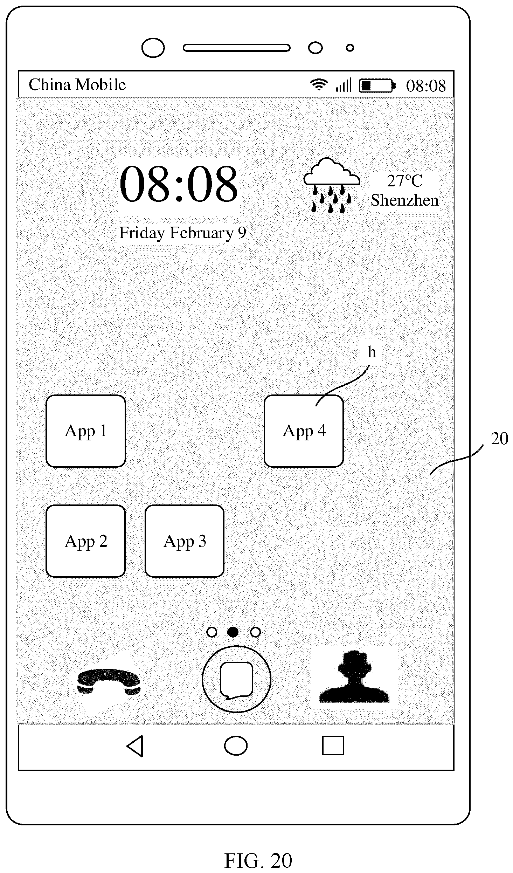

FIG. 19 is a schematic diagram of another example desktop of a second electronic device according to this application. FIG. 20 is a schematic diagram of another example desktop of a second electronic device according to this application. FIG. 19 shows an example in which a first application icon h is displayed in a target area of a target desktop in a to-be-downloaded state. FIG. 20 shows an example in which a first application icon h is displayed in a target area of a target desktop in an installed state.

In a specific implementation process, after receiving the application information of the first application and the location information, the second electronic device may first perform permission verification on the first electronic device, and after the permission verification succeeds, determine whether the first application is installed. If the second electronic device determines that the first application is not installed, the second electronic device may perform validity verification on data structures of the application information of the first application and the location information. After the validity verification succeeds, the second electronic device displays the first application icon on the target desktop or the target area of the target desktop in the to-be-downloaded state based on the application information of the first application, or directly downloads and installs the first application, and then displays the first application icon on the target desktop or the target area of the target desktop in the installed state based on the application information of the first application.

If the permission verification performed by the second electronic device on the first electronic device fails, or the first application is installed on the second electronic device, or the validity verification performed on the data structure of the application information of the first application and/or that of the location information fail/fails, the second electronic device may return the first message to the first electronic device. The first message is used to prompt the first electronic device that the permission verification on the first electronic device fails, or the first application is installed on the second electronic device, or the data structure of the application information of the first application and/or that of the location information are/is incorrect, to notify the first electronic device that cross-device sharing of the first application fails. After receiving the first message, the second electronic device generates the prompt information to prompt the user that sharing of the first application fails.

In this embodiment of the present invention, the cross-device desktop management method may further include the following steps:
Step S308: The first electronic device receives a third message of the second electronic device, where the third message is used to indicate that the first electronic device successfully shares the first application with the second electronic device.
Step S309: The first electronic device uninstalls the first application.

It should be known that, in this embodiment of the present invention, after receiving the application information corresponding to the first application icon and the location information, the second electronic device may not necessarily perform permission verification on the first electronic device and/or perform validity verification on the data structure of the application information of the first application and that of the location information.

It may be understood that, in this embodiment of the present invention, after the first application selected by the user is successfully shared with the second electronic device, the first application on the first electronic device is deleted. This is applicable to a scenario in which the user does not need to use the first application on the first electronic device and the second electronic device at the same time, thereby reducing use of memory space of the first electronic device.

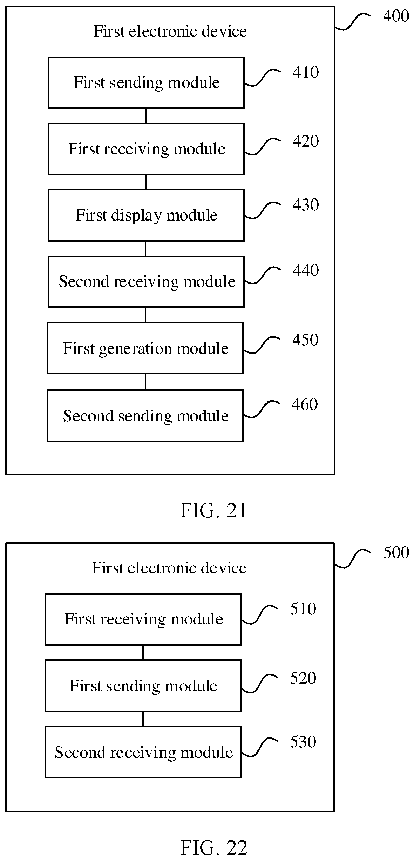

As shown in FIG. 21, an embodiment of the present invention further provides a first electronic device 400. The first electronic device 400 includes:
a first sending module 410, configured to send an access request to a second electronic device, where the access request is used to request to access desktop information of the second electronic device;
a first receiving module 420, configured to receive the desktop information sent by the second electronic device;
a first display module 430, configured to display a desktop of the second electronic device based on the desktop information;
a second receiving module 440, configured to receive an editing operation performed by a user on the desktop of the second electronic device, where the desktop editing information is used to edit the desktop of the second device;
a first generation module 450, configured to generate desktop editing information of the second electronic device based on the editing operation, where the desktop editing information is used to edit the desktop of the second device; and
a second sending module 460, configured to send the desktop editing information to the second electronic device.

In a feasible implementation, the first sending module 410 includes:
a first display unit, configured to display a desktop editing interface, where the desktop editing interface includes N option icons, the N option icons respectively correspond to N to-be-selected electronic devices, the N option icons include a first option icon corresponding to the second electronic device, and N is greater than or equal to 1; and
a first sending unit, configured to send the access request to the second electronic device in response to a selection operation performed by the user on the first option icon.

In a feasible implementation, the editing operation performed by the user on the desktop of the second electronic device includes any one or more of the following: changing a wallpaper, adding or deleting a widget, modifying a desktop transition effect, setting a desktop layout, and modifying an application icon.

In a feasible implementation, the first electronic device 400 further includes:
a second display module, configured to display M option icons, where the M option icons respectively correspond to M to-be-selected electronic devices, the M option icons include a first option icon corresponding to the second electronic device, and M is greater than or equal to 1; and a third receiving module, configured to receive a first predetermined operation of moving a first application icon of a first application to the first option icon by the user, where the first application is installed on the first electronic device; and
a third sending module, configured to send application information of the first application to the second electronic device in response to the first predetermined operation.

In a feasible implementation, the first electronic device 400 further includes:
a fourth receiving module, configured to receive a first message of the second electronic device; and
a first prompt module, configured to prompt, based on the first message, the user that sharing of the first application fails.

In a feasible implementation, the first electronic device 400 further includes:
a fifth receiving module, configured to receive a second message of the second electronic device, where the second message is used to indicate that the first application is successfully shared with the second electronic device.

In a feasible implementation, the first electronic device 400 further includes:
a first uninstallation module, configured to uninstall the first application in response to the second message.

In a feasible implementation, the first sending module 410 includes:
a first display unit, configured to display Q option icons, where the Q option icons respectively correspond to Q to-be-selected electronic devices, the Q option icons include a first option icon corresponding to the second electronic device, and Q is greater than or equal to 1; and
a first receiving unit, configured to receive a second predetermined operation of moving a first application icon of a first application to the first option icon by the user, where the first application is installed on the first electronic device;
correspondingly, the second receiving module 440 includes:
   a second receiving unit, configured to receive a movement operation performed by the user on the first application icon, where the movement operation is used to move the first application icon to a target desktop of the second electronic device, or move the first application icon to a target area of the target desktop; and
   correspondingly, the first generation module 450 includes:
      a first generation unit, configured to generate location information based on the movement operation, where the location information includes information about selection performed by the user on the target desktop, or information about selection performed by the user on the target desktop and the target area of the target desktop; and
      a second sending unit, configured to send application information of the first application and the location information to the second electronic device, where
      the location information is used by the second electronic device to determine to display the first application icon on the target desktop or the target area of the target desktop.

In a feasible implementation, the desktop information of the second electronic device includes application information of the second electronic device, and the first electronic device 400 further includes:
a first determining module, configured to determine, based on the application information of the second electronic device, whether the first application is installed on the second electronic device; and
a second prompt module, configured to: if the first application is not installed on the second electronic device, prompt the user that the first application is installed on the second electronic device.

In a feasible implementation, the first electronic device 400 further includes:
a sixth receiving module, configured to receive a third message of the second electronic device, where the third message is used to indicate that the first application is successfully shared with the second electronic device.

In a feasible implementation, the first electronic device 400 further includes:
a second uninstallation module, configured to uninstall the first application in response to the third message.

A person skilled in the art may clearly understand that, for the purpose of convenient and brief descriptions, for detailed working processes of the modules and the units in the first electronic device described above, refer to corresponding content in the foregoing method embodiments. Details are not described again herein.

As shown in FIG. 22, an embodiment of the present invention further provides a second electronic device 500. The first electronic device 500 includes:
a first receiving module 510, configured to receive an access request of a first electronic device, where the access request is used to request to access desktop information of the second electronic device;
a first sending module 520, configured to send the desktop information to the first electronic device based on the access request of the first electronic device, where the desktop information is used to display a desktop of the second electronic device; and
a second receiving module 530, configured to: receive desktop editing information sent by the first electronic device, and edit the desktop based on the desktop editing information.

In a feasible implementation, the second receiving module 530 is specifically configured to perform any one or more of the following: changing a wallpaper, adding or deleting a widget, modifying a desktop transition effect, setting a desktop layout, and modifying an application icon.

In a feasible implementation, the second electronic device 500 further includes:
a third receiving module, configured to receive application information of a first application that is sent by the first electronic device; and
a first display module, configured to: based on the application information of the first application, display a first application icon corresponding to the first application in a to-be-downloaded state, or download and install the first application, and display the first application icon corresponding to the first application in an installed state.

In a feasible implementation, the second electronic device 500 further includes:
a first verification module, configured to: perform permission verification on the first electronic device, determine whether the first application is installed, and determine whether a data structure of the application information meets a validity requirement; and
a second sending module, configured to: if the permission verification on the first electronic device fails, and/or the first application is not installed, and/or the data structure of the application information does not meet the validity requirement, send a first message to the second electronic device, where the first message is used to prompt that sharing of the first application fails, and is specifically used to prompt that the permission verification performed by the second electronic device on the first electronic device fails, and/or the first application is installed on the second electronic device, and/or the data structure of the application information of the first application does not meet a preset requirement.

In a feasible implementation, the second receiving module 530 includes:
a first receiving unit, configured to receive application information of a first application and location information that are sent by the first electronic device, where the location information includes information about selection performed by a user on a target desktop, or information about selection performed by the user on the target desktop and a target area of the target desktop, and the target desktop is the desktop of the second electronic device; and
a second display unit, configured to: based on the application information of the first application and the location information, display a first application icon on the target desktop or the target area of the target desktop in a to-be-downloaded state, or download and install the first application, and then display the first application icon corresponding to the first application on the target desktop or the target area of the target desktop in an installed state.

A person skilled in the art may clearly understand that, for the purpose of convenient and brief descriptions, for detailed working processes of the modules and the units in the second electronic device described above, refer to corresponding content in the foregoing method embodiments. Details are not described again herein.

This application further provides an electronic device. As shown in FIG. 1, the electronic device 100 includes an internal memory 121. The internal memory 121 stores a computer program. A processor 110 is connected to the internal memory 121. The processor 110 executes the computer program to implement the cross-device desktop management method provided in any one of the foregoing embodiments.

This application further provides a computer storage medium, including computer instructions. When the computer instructions are run on an electronic device, the electronic device is enabled to perform the steps in the cross-device desktop management method provided in any one of the foregoing embodiments.

This application further provides a computer program product. When the computer program product is run on a computer, the computer is enabled to perform the steps in the cross-device desktop management method provided in any one of the foregoing embodiments.

A person skilled in the art may clearly understand that, for the purpose of convenient and brief descriptions, for detailed working processes of the electronic device, the computer storage medium, and the computer program product described above, refer to corresponding processes in the foregoing method embodiments. Details are not described again herein.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A cross-device desktop management method, applied to a first electronic device, wherein the method comprises:
sending an access request to a second electronic device, wherein the access request is used to request to access desktop information of the second electronic device;
receiving the desktop information sent by the second electronic device;
displaying a desktop of the second electronic device based on the desktop information;
receiving an editing operation performed by a user on the desktop of the second electronic device;
generating desktop editing information of the second electronic device based on the editing operation, wherein the desktop editing information is used to edit the desktop of the second device; and
sending the desktop editing information to the second electronic device.

2. The method according to claim 1, wherein the sending an access request to a second electronic device comprises:
displaying a desktop editing interface, wherein the desktop editing interface comprises N option icons, the N option icons respectively correspond to N to-be-selected electronic devices, the N option icons comprise a first option icon corresponding to the second electronic device, and N is greater than or equal to 1; and
sending the access request to the second electronic device in response to a selection operation performed by the user on the first option icon.

3. The method according to claim 1 or 2, wherein the editing operation performed by the user on the desktop of the second electronic device comprises any one or more of the following: changing a wallpaper, adding or deleting a widget, modifying a desktop transition effect, setting a desktop layout, and modifying an application icon.

4. The method according to claim 1, wherein the method further comprises:
displaying M option icons, wherein the M option icons respectively correspond to M to-be-selected electronic devices, the M option icons comprise a first option icon corresponding to the second electronic device, and M is greater than or equal to 1;
receiving a first predetermined operation of moving a first application icon of a first application to the first option icon by the user, wherein the first application is installed on the first electronic device; and
sending application information of the first application to the second electronic device in response to the first predetermined operation.

5. The method according to claim 4, wherein after the sending application information of the first application to the second electronic device, the method further comprises:
receiving a first message of the second electronic device; and
prompting, based on the first message, the user that sharing of the first application fails.

6. The method according to claim 4, wherein after the sending application information of the first application to the second electronic device, the method further comprises:
receiving a second message of the second electronic device, wherein the second message is used to indicate that the first application is successfully shared with the second electronic device.

7. The method according to claim 6, wherein after the receiving a second message of the second electronic device, the method further comprises:
uninstalling the first application in response to the second message.

8. The method according to claim 1, wherein the sending an access request to a second electronic device comprises:
displaying Q option icons, wherein the Q option icons respectively correspond to Q to-be-selected electronic devices, the Q option icons comprise a first option icon corresponding to the second electronic device, and Q is greater than or equal to 1;
receiving a second predetermined operation of moving a first application icon of a first application to the first option icon by the user, wherein the first application is installed on the first electronic device; and
sending the access request to the second electronic device based on the second predetermined operation;
correspondingly, the receiving an editing operation performed by a user on the desktop of the second electronic device comprises:
receiving a movement operation performed by the user on the first application icon, wherein the movement operation is used to move the first application icon to a target desktop of the second electronic device, or move the first application icon to a target area of the target desktop; and
correspondingly, the generating desktop editing information of the second electronic device based on the editing operation comprises:
generating location information based on the movement operation, wherein the location information comprises information about selection performed by the user on the target desktop, or information about selection performed by the user on the target desktop and the target area of the target desktop; and
sending application information of the first application and the location information to the second electronic device, wherein
the location information is used by the second electronic device to determine to display the first application icon on the target desktop or the target area of the target desktop.

9. The method according to claim 8, wherein the desktop information of the second electronic device comprises application information of the second electronic device, and after the receiving the desktop information sent by the second electronic device, the method further comprises:
determining, based on the application information of the second electronic device, whether the first application is installed on the second electronic device; and
if no, prompting the user that the first application is installed on the second electronic device.

10. The method according to claim 8, wherein after the sending application information of the first application and the location information to the second electronic device, the method further comprises:
receiving a third message of the second electronic device, wherein the third message is used to indicate that the first application is successfully shared with the second electronic device.

11. The method according to claim 10, wherein after the receiving a third message of the second electronic device, the method further comprises:
uninstalling the first application in response to the third message.

12. A cross-device desktop management method, applied to a second electronic device, wherein the method comprises:
receiving an access request of a first electronic device, wherein the access request is used to request to access desktop information;
sending the desktop information to the first electronic device based on the access request of the first electronic device, wherein the desktop information is used to display a desktop of the second electronic device; and
receiving desktop editing information sent by the first electronic device, and editing the desktop based on the desktop editing information.

13. The method according to claim 12, wherein the editing the desktop based on the desktop editing information comprises:
performing any one or more of the following: changing a wallpaper, adding or deleting a widget, modifying a desktop transition effect, setting a desktop layout, and modifying an application icon.

14. The method according to claim 12, wherein the method further comprises:
receiving application information of a first application that is sent by the first electronic device; and
based on the application information of the first application, displaying a first application icon corresponding to the first application in a to-be-downloaded state, or downloading and installing the first application, and displaying the first application icon corresponding to the first application in an installed state.

15. The method according to claim 14, wherein after the receiving application information of a first application that is sent by the first electronic device, the method further comprises:
performing permission verification on the first electronic device, determining whether the first application is installed, and determining whether a data structure of the application information meets a validity requirement; and
if the permission verification on the first electronic device fails, and/or the first application is not installed, and/or the data structure of the application information does not meet the validity requirement, sending a first message to the second electronic device, wherein the first message is used to prompt that sharing of the first application fails.

16. The method according to claim 12, wherein the receiving desktop editing information sent by the first electronic device, and editing the desktop based on the desktop editing information comprises:
receiving application information of a first application and location information that are sent by the first electronic device, wherein the location information comprises information about selection performed by a user on a target desktop, or information about selection performed by the user on the target desktop and a target area of the target desktop, and the target desktop is the desktop of the second electronic device; and
based on the application information of the first application and the location information, displaying a first application icon corresponding to the first application on the target desktop or the target area of the target desktop in a to-be-downloaded state, or downloading and installing the first application, and then displaying the first application icon corresponding to the first application on the target desktop or the target area of the target desktop in an installed state.

17. A first electronic device, wherein the first electronic device comprises:
a first sending module, configured to send an access request to a second electronic device, wherein the access request is used to request to access desktop information of the second electronic device;
a first receiving module, configured to receive the desktop information sent by the second electronic device;
a first display module, configured to display a desktop of the second electronic device based on the desktop information;
a second receiving module, configured to receive an editing operation performed by a user on the desktop of the second electronic device, wherein the desktop editing information is used to edit the desktop of the second device;
a first generation module, configured to generate desktop editing information of the second electronic device based on the editing operation, wherein the desktop editing information is used to edit the desktop of the second device; and
a second sending module, configured to send the desktop editing information to the second electronic device.

18. The first electronic device according to claim 17, wherein the first sending module comprises:
a first display unit, configured to display a desktop editing interface, wherein the desktop editing interface comprises N option icons, the N option icons respectively correspond to N to-be-selected electronic devices, the N option icons comprise a first option icon corresponding to the second electronic device, and N is greater than or equal to 1; and
a first sending unit, configured to send the access request to the second electronic device in response to a selection operation performed by the user on the first option icon.

19. The first electronic device according to claim 17 or 18, wherein the editing operation performed by the user on the desktop of the second electronic device comprises any one or more of the following: changing a wallpaper, adding or deleting a widget, modifying a desktop transition effect, setting a desktop layout, and modifying an application icon.

20. The first electronic device according to claim 17, wherein the first electronic device further comprises:
a second display module, configured to display M option icons, wherein the M option icons respectively correspond to M to-be-selected electronic devices, the M option icons comprise a first option icon corresponding to the second electronic device, and M is greater than or equal to 1; and a third receiving module, configured to receive a first predetermined operation of moving a first application icon of a first application to the first option icon by the user, wherein the first application is installed on the first electronic device; and
a third sending module, configured to send application information of the first application to the second electronic device in response to the first predetermined operation.

21. The first electronic device according to claim 20, wherein the first electronic device further comprises:
a fourth receiving module, configured to receive a first message of the second electronic device; and
a first prompt module, configured to prompt, based on the first message, the user that sharing of the first application fails.

22. The first electronic device according to claim 20, wherein the first electronic device further comprises:
a fifth receiving module, configured to receive a second message of the second electronic device, wherein the second message is used to indicate that the first application is successfully shared with the second electronic device.

23. The first electronic device according to claim 22, wherein the first electronic device further comprises:
a first uninstallation module, configured to uninstall the first application in response to the second message.

24. The first electronic device according to claim 17, wherein the first sending module comprises:
a first display unit, configured to display Q option icons, wherein the Q option icons respectively correspond to Q to-be-selected electronic devices, the Q option icons comprise a first option icon corresponding to the second electronic device, and Q is greater than or equal to 1; and
a first receiving unit, configured to receive a second predetermined operation of moving a first application icon of a first application to the first option icon by the user, wherein the first application is installed on the first electronic device;
correspondingly, the second receiving module comprises:
a second receiving unit, configured to receive a movement operation performed by the user on the first application icon, wherein the movement operation is used to move the first application icon to a target desktop of the second electronic device, or move the first application icon to a target area of the target desktop; and
correspondingly, the first generation module comprises:
a first generation unit, configured to generate location information based on the movement operation, wherein the location information comprises information about selection performed by the user on the target desktop, or information about selection performed by the user on the target desktop and the target area of the target desktop; and
a second sending unit, configured to send application information of the first application and the location information to the second electronic device, wherein the location information is used by the second electronic device to determine to display the first application icon on the target desktop or the target area of the target desktop.

25. The first electronic device according to claim 24, wherein the desktop information of the second electronic device comprises application information of the second electronic device, and the first electronic device further comprises:
a first determining module, configured to determine, based on the application information of the second electronic device, whether the first application is installed on the second electronic device; and
a second prompt module, configured to: if the first application is installed on the second electronic device, prompt the user that the first application is installed on the second electronic device.

26. The first electronic device according to claim 24, wherein the first electronic device further comprises:
a sixth receiving module, configured to receive a third message of the second electronic device, wherein the third message is used to indicate that the first application is successfully shared with the second electronic device.

27. The first electronic device according to claim 26, wherein the first electronic device further comprises:
a second uninstallation module, configured to uninstall the first application in response to the third message.

28. A second electronic device, wherein the second electronic device comprises:
a first receiving module, configured to receive an access request of a first electronic device, wherein the access request is used to request to access desktop information of the second electronic device;
a first sending module, configured to send the desktop information to the first electronic device based on the access request of the first electronic device, wherein the desktop information is used to display a desktop of the second electronic device; and
a second receiving module, configured to: receive desktop editing information sent by the first electronic device, and edit the desktop based on the desktop editing information.

29. The second electronic device according to claim 28, wherein the second receiving module is specifically configured to perform any one or more of the following: changing a wallpaper, adding or deleting a widget, modifying a desktop transition effect, setting a desktop layout, and modifying an application icon.

30. The second electronic device according to claim 28, wherein the second electronic device further comprises:
a third receiving module, configured to receive application information of a first application that is sent by the first electronic device; and
a first display module, configured to: based on the application information of the first application, display a first application icon corresponding to the first application in a to-be-downloaded state, or download and install the first application, and display the first application icon corresponding to the first application in an installed state.

31. The second electronic device according to claim 30, wherein the second electronic device further comprises:
a first verification module, configured to: perform permission verification on the first electronic device, determine whether the first application is installed, and determine whether a data structure of the application information meets a validity requirement; and
a second sending module, configured to: if the permission verification on the first electronic device fails, and/or the first application is not installed, and/or the data structure of the application information does not meet the validity requirement, send a first message to the second electronic device, wherein the first message is used to prompt that sharing of the first application fails.

32. The second electronic device according to claim 28, wherein the second receiving module comprises:
a first receiving unit, configured to receive application information of a first application and location information that are sent by the first electronic device, wherein the location information comprises information about selection performed by a user on a target desktop, or information about selection performed by the user on the target desktop and a target area of the target desktop, and the target desktop is the desktop of the second electronic device; and
a second display unit, configured to: based on the application information of the first application and the location information, display a first application icon corresponding to the first application on the target desktop or the target area of the target desktop in a to-be-downloaded state, or download and install the first application, and then display the first application icon corresponding to the first application on the target desktop or the target area of the target desktop in an installed state.

33. An electronic device, wherein the electronic device comprises a memory, a processor, a touch sensor, and a display, the memory stores a computer program, the processor is connected to the memory, and the processor executes the computer program to implement the cross-device desktop management method according to any one of claims 1 to 11.

34. An electronic device, wherein the electronic device comprises a memory, a processor, a touch sensor, and a display, the memory stores a computer program, the processor is connected to the memory, and the processor executes the computer program to implement the cross-device desktop management method according to any one of claims 12 to 16.

35. A computer storage medium, comprising computer instructions, wherein when the computer instructions are run on an electronic device, the electronic device is enabled to perform the cross-device desktop management method according to any one of claims 1 to 11.

36. A computer storage medium, comprising computer instructions, wherein when the computer instructions are run on an electronic device, the electronic device is enabled to perform the cross-device desktop management method according to any one of claims 12 to 16.

37. A computer program product, wherein when the computer program product is run on a computer, the computer is enabled to perform the cross-device desktop management method according to any one of claims 1 to 11.

38. A computer program product, wherein when the computer program product is run on a computer, the computer is enabled to perform the cross-device desktop management method according to any one of claims 12 to 16.
